# EUROPEAN PATENT APPLICATION

(11) **EP 4 570 957 A2**
(43) Date of publication of application: **18.06.2025**
(21) Application number: 24219484.3
(22) Date of filing: 12.12.2024
(51) Int. Cl.: C25B 1/042, C25B 11/051, C25B 13/07, C25B 15/02, C25B 15/023

(54) **ELECTROLYZER SYSTEM AND METHOD OF OPERATING SAME WITH INTERMITTENT POWER SOURCES**

(30) Priority: 13.12.2023 US 202363609542 P
(71) Applicant: Bloom Energy Corporation, San Jose, CA 95134 (US)
(72) Inventor: PMSVVSV, Prasad, San Jose', CA 95134 (US); SRIDHAR, K.R., San Jose', CA 95134 (US); RAMANAN, Natarajan, San Jose', CA 95134 (US)
(74) Representative: Wichmann, Hendrik

(57) **Abstract**

A method operating an electrolyzer system includes producing hydrogen by electrolysis of steam in at least one electrolyzer cell stack of the electrolyzer system using power received from an intermittent power source, detecting a reduction in a level of power received from the intermittent power source below a first threshold, decreasing a rate of producing hydrogen in response to the detected reduction in the level power below the first threshold, detecting a reduction in a level of power received from the intermittent power source below a second first threshold that is lower than the first threshold, and switching the electrolyzer system into a hot standby mode in which the electrolyzer system does not produce hydrogen and maintains the least one electrolyzer cell stack above a predetermined threshold temperature.

## Description

### FIELD

The present invention is directed to electrolyzer systems and methods of operating the same with intermittent power sources, such as solar power sources.

### BACKGROUND

In a solid oxide electrolyzer cell (SOEC), a cathode electrode is separated from an anode electrode by a solid oxide electrolyte. When a SOEC is used to produce hydrogen through electrolysis, a positive potential is applied to the air side of the SOEC and oxygen ions are transported from the fuel (e.g., steam) side to the air side. Throughout this specification, the SOEC anode will be referred to as the air electrode, and the SOEC cathode will be referred to as the fuel electrode. During SOEC operation, water (e.g., steam) in the fuel stream is reduced (H₂O + 2e⁻→O²⁻ + H₂) to form H₂ gas and O²⁻ ions, the O²⁻ ions are transported through the solid electrolyte, and then oxidized (e.g., by an air inlet stream) on the air side (O²⁻ to O₂) to produce molecular oxygen (e.g., oxygen enriched air).

### SUMMARY

According to various embodiments, a method operating an electrolyzer system includes producing hydrogen by electrolysis of steam in at least one electrolyzer cell stack of the electrolyzer system using power received from an intermittent power source, detecting a reduction in a level of power received from the intermittent power source below a first threshold, decreasing a rate of producing the hydrogen in response to the detected reduction in the level power below the first threshold, detecting a reduction in a level of power received from the intermittent power source below a second first threshold that is lower than the first threshold, and switching the electrolyzer system into a hot standby mode in which the electrolyzer system does not produce hydrogen and maintains the least one electrolyzer cell stack above a predetermined threshold temperature.

According to various embodiments, a system includes an electrolyzer system comprising at least one electrolyzer cell stack configured to produce hydrogen by electrolysis of steam; an intermittent power source electrically connected to the electrolyzer system; an energy storage system electrically connected to the electrolyzer system; and a controller. The controller includes machine executable instructions that operate to: detect a reduction in a level of power received from the intermittent power source below a first threshold; decrease a rate of producing hydrogen in response to the detected reduction in the level power below the first threshold; detect a reduction in a level of power received from the intermittent power source below a second first threshold that is lower than the first threshold; and switch the electrolyzer system into a hot standby mode in which the electrolyzer system does not produce hydrogen and maintains the least one electrolyzer cell stack above a predetermined threshold temperature.

### FIGURES

FIG. 1A is a perspective view of a solid oxide electrolyzer cell (SOEC) stack.
FIG. 1B is a side cross-sectional view of a portion of the stack of FIG. 1A.
FIG. 2 is a schematic view of an electrolyzer system, according to various embodiments of the present disclosure.
FIG. 3A is a cross-sectional view showing air flow in a hotbox of the electrolyzer system of FIG. 2, according to various embodiments of the present disclosure.
FIG. 3B is a cross-sectional view showing steam and hydrogen flow in the hotbox of the electrolyzer system of FIG. 2, according to various embodiments of the present disclosure.
FIG. 3C is a top view showing heat transfer in the hotbox of FIG. 2, according to various embodiments of the present disclosure.
FIG. 4 is a component block diagram of a portion of the electrolyzer system of FIG. 2, according to various embodiments of the present disclosure.
FIG. 5 is a diagram of an electrolyzer cell operating in an isolated hot standby mode, according to various embodiments of the present disclosure.
FIG. 6 is a diagram of the electrolyzer cell of FIG. 5 operating in an isolated electrolysis mode, according to various embodiments of the present disclosure.
FIG. 7 is perspective view a modular electrolyzer system according to various embodiments of the present disclosure.
FIG. 8 is a circuit diagram of a system including the electrolyzer system and two or more power sources for supplying power to the electrolyzer system.
FIG. 9 is plot of voltage versus time illustrating various setpoints for electrolyzer system operation based on power availability according to various embodiments of the present disclosure.
FIGS. 10A and 10B are graphs of various solar energy curves under various conditions.
FIGS. 11A, 11B and 11C are graphs of solar energy availability for an electrolyzer system according to various comparative embodiments of the present disclosure.
FIGS. 12A and 12B comprise a bar graph and table that illustrate various power requirements and set points for an electrolyzer system according to various embodiments of the present disclosure.
FIGS. 13A and 13B are graphs of various representations of solar energy curves according to various embodiments of the present disclosure, and FIG. 13C is a graph of power demand as a function of time of an electrolyzer system according to various embodiments of the present disclosure.
FIGS. 14A and 14B illustrate graphs of various solar energy availability scenarios according to various embodiments of the present disclosure.
FIG. 15 illustrates a graph of a solar energy availability scenario according to various embodiments of the present disclosure.
FIG. 16 is a diagram of a method according to various embodiments of the present disclosure.

### DETAILED DESCRIPTION

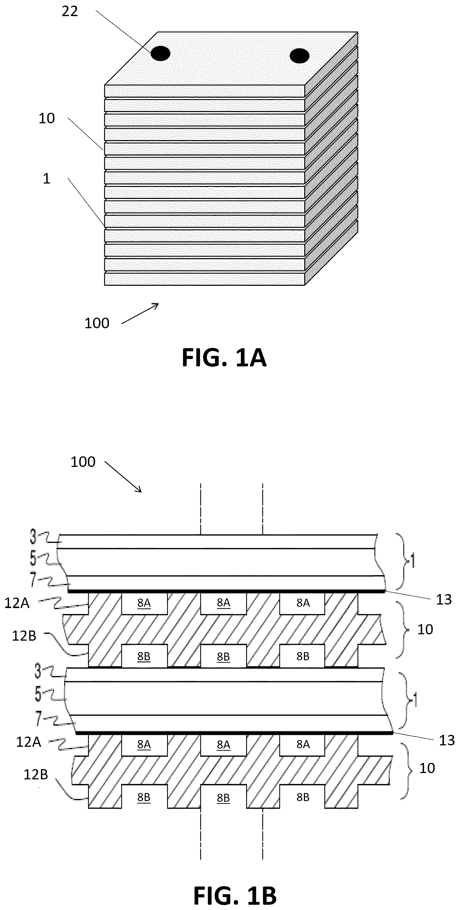

FIG. 1A is a perspective view of an electrolyzer cell stack 100, such as a solid oxide electrolyzer cell (SOEC) stack, and FIG. 1B is a side cross-sectional view of a portion of the stack 100 of FIG. 1A. Referring to FIGS. 1A and 1B, the stack 100 includes multiple electrolyzer cells (e.g., SOECs) 1 that are separated by interconnects 10, which may also be referred to as gas flow separator plates or bipolar plates. Each electrolyzer cell 1 includes an air electrode 3, an electrolyte 5, such as a solid oxide electrolyte for a SOEC, and a fuel electrode 7. The stack 100 also includes internal fuel riser channels 22.

Various materials may be used for the air electrode 3, electrolyte 5, and fuel electrode 7. For example, the air electrode 3 may comprise an electrically conductive material, such as an electrically conductive perovskite material, such as lanthanum strontium manganite (LSM). Other conductive perovskites, such as LSCo, etc., or metals, such as Pt, may also be used. The electrolyte 5 may comprise a stabilized zirconia, such as scandia stabilized zirconia (SSZ) or yttria stabilized zirconia (YSZ), yttria-ceria-stabilized zirconia (YCSZ), ytterbia-ceria-scandia-stabilized zirconia (YbCSSZ), or blends thereof. In YbCSSZ, scandia may be present in an amount equal to 9 to 11 mol %, such as 10 mol %, ceria may present in amount greater than 0 and equal to or less than 3 mol %, for example 0.5 mol % to 2.5 mol %, such as 1 mol %, and ytterbia may be present in an amount greater than 0 and equal to or less than 2.5 mol %, for example 0.5 mol % to 2 mol %, such as 1 mol %, as disclosed in U.S. Pat. No. 8,580,456, which is incorporated herein by reference. Alternatively, the electrolyte 5 may comprise another ionically conductive material, such as a doped ceria. The fuel electrode 7 may comprise a cermet comprising a nickel containing phase and a ceramic phase. The nickel containing phase may consist entirely of nickel in a reduced state. The ceramic phase may comprise a stabilized zirconia, such as yttria and/or scandia stabilized zirconia and/or a doped ceria, such as gadolinia, yttria and/or samaria doped ceria. The electrodes and the electrolyte may each comprise one or more sublayers of one or more of the above described materials.

Each interconnect 10 electrically connects adjacent electrolyzer cells 1 in the stack 100. In particular, an interconnect 10 may electrically connect the fuel electrode 7 of one electrolyzer cell 1 to the air electrode 3 of an adjacent electrolyzer cell 1. FIG. 1B shows that the lower electrolyzer cell 1 is located between two interconnects 10.

Each interconnect 10 may be made of or may contain electrically conductive material, such as a metal alloy (e.g., chromium-iron alloy) which has a similar coefficient of thermal expansion to that of the solid oxide electrolyte in the cells (e.g., a difference of 0-10%). For example, the interconnects 10 may comprise a metal (e.g., a chromium-iron alloy, such as 4-6 weight percent iron, optionally 1 or less weight percent yttrium and balance chromium alloy). Alternatively, any other suitable conductive interconnect material, such as stainless steel (e.g., ferritic stainless steel, SS446, SS430, etc.) or iron-chromium alloy (e.g., Crofer^{tm} 22 APU alloy which contains 20 to 24 wt.% Cr, less than 1 wt.% Mn, Ti and La, and balance Fe, or ZMG^{tm} 232L alloy which contains 21 to 23 wt.% Cr, 1 wt.% Mn and less than 1 wt.% Si, C, Ni, Al, Zr and La, and balance Fe) may be used.

Each interconnect 10 includes fuel ribs 12A that at least partially define fuel channels 8A, and air ribs 12B that at least partially define air channels 8B. The interconnect 10 may operate as a gas-fuel separator that separates a fuel, such as steam, flowing to the fuel electrode 7 of one electrolyzer cell 1 in the stack 100 from oxidant, such as air, flowing to the air electrode 3 of an adjacent electrolyzer cell 1 in the stack 100. At either end of the stack 100, there may be an air end plate or fuel end plate (not shown) for providing air or fuel, respectively, to the end electrode. Alternatively, the air end plate or fuel end plate may comprise the same interconnect structure used throughout the stack. An optional conductive contact layer 13, such as a nickel mesh, may be located between the fuel electrode 7 and the fuel ribs 12.

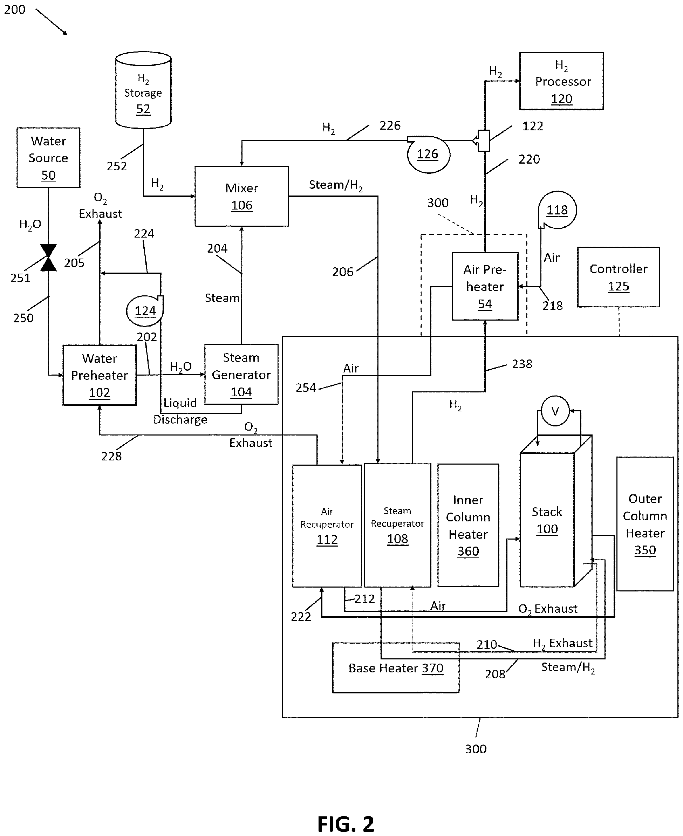

FIG. 2 is schematic view of an electrolyzer system 200, according to various embodiments of the present disclosure. Referring to FIGS. 1A, 1B, and 2, the system 200 may include one or more electrolyzer cell stacks 100 or columns, such as SOEC stacks or columns. Each column may include one or more electrolyzer cell stacks 100. The electrolyzer cell stack 100 includes multiple electrolyzer cells, such as SOECs, as described with respect to FIGS. 1A and 1B. The system 200 may also include a steam generator 104, a steam recuperator heat exchanger 108, an air recuperator heat exchanger 112, an air blower 118, a recycle blower 126, an outer column heater 350, an inner column heater 360, and a base heater 370. The system 200 may also optionally include at least one of an air pre-heater heat exchanger 54, a water preheater heat exchanger 102, a mixer 106, a hydrogen processor 120 and/or a hydrogen separator (e.g., splitter or valve) 122.

The system 200 may include a hotbox 300 that houses various components, such as the stack 100, the steam recuperator 108, the air recuperator 112, the outer column heater 350, the inner column heater 360 and/or the base heater 370. In some embodiments, the hotbox 300 may include multiple stacks 100 or multiple columns of stacks 100. The water preheater 102 and the steam generator 104 may be located external to the hotbox 300, as shown in FIG. 2. Alternatively, the water preheater 102 and/or the steam generator 104 may be located inside the hotbox 300. In another alternative embodiment, the SOEC system may have an external steam source, in which case the water preheater 102 and/or the steam generator 104 may be omitted.

During operation, the stack 100 may be provided with steam (e.g., steam inlet stream) and electric power (e.g., current or voltage) from an external power source. In particular, the steam may be provided to the fuel electrodes 7 of the electrolyzer cells 1 of the stack 100, and the power source may apply a voltage between the fuel electrodes 7 and the air electrodes 3, in order to electrochemically split water (e.g., steam) molecules and generate hydrogen and oxygen. Air may also be provided to the air electrodes 3, in order to sweep the oxygen from the air electrodes 3. As such, the stack 100 may output a hydrogen stream and an oxygen-rich exhaust stream, such as an oxygen-rich air stream ("oxygen exhaust stream").

In order to generate the steam, water may be provided to the system 200 from a water source 50. The water source 50 may include a municipal water supply (e.g., water pipe) and/or a water storage tank. The water may be deionized (DI) water that is deionized as much as is practical (e.g., <0.1 µS/cm), in order to prevent and/or minimize scaling during vaporization. In some embodiments, the water source 50 may include one or more deionization beds (e.g., downstream of the water pipe or tank). The water source 50 may provide the water to the system 200 via a water inlet conduit 250. In various embodiments, the water inlet conduit 250 may include a water flow control device 251 such as a valve, a mass flow controller, a positive displacement pump, a water flow meter, or the like, in order to provide a desired water flow rate to the system 200.

If the system 200 includes the water preheater 102, the water may be provided from the water source 50 to the water preheater 102 through the water inlet conduit 250. The water preheater 102 may be a heat exchanger configured to heat the water using heat recovered from the oxygen exhaust stream from the stack 100. Preheating the water may reduce the total power consumption of the system 200 per unit of hydrogen generated. In particular, the water preheater 102 may recover heat from the oxygen exhaust stream that may not be recoverable by the air recuperator 112, as discussed below. The water preheater 102 may heat the water to a temperature above 50 °C, such as a temperature of about 70 °C to 80 °C. The oxygen exhaust stream may be output from the water preheater 102 via conduit 205 at a temperature above 80 °C, such as above 100 °C, such as a temperature of about 120 °C to 140 °C.

The water output from the water preheater 102 (or from the water source 50 if the water preheater 102 is omitted) may be provided to the steam generator 104 through a water conduit 202. The steam generator 104 may be configured to heat the water to convert the water into steam. The steam generator 104 may include a heating element to vaporize the water and generate steam. For example, the steam generator 104 may include an AC or DC resistance heating element or an induction heating element. Alternatively, the steam generator 104 may comprise a heat exchanger which is located inside the hotbox 300 and which is heated by one or more hot exhaust streams flowing through the hotbox 300. The steam generator 104 heats the water above 100 °C to generate steam, such as a temperature of about 120 °C to 145 °C.

The steam generator 104 may include multiple zones/elements that may or may not be mechanically separate. For example, the steam generator 104 may include a pre-boiler to heat the water up to or near to the boiling point. The steam generator 104 may also include a vaporizer configured to convert the pre-boiled water into steam. The steam generator 104 may also include a deaerator to provide a relatively small purge of steam to remove dissolved air from the water prior to bulk vaporization. The steam generator 104 may also include an optional superheater configured to further increase the temperature of the steam generated in the vaporizer. The steam generator 104 may include a demister pad located downstream of the heating element and/or upstream from the super heater. The demister pad may be configured to minimize entrainment of liquid water in the steam output from the steam generator 104 and/or provided to the superheater.

If the steam product is superheated, it will be less likely to condense downstream from the steam generator 104 due to heat loss. Avoidance of condensation is preferable, as condensed water is more likely to form slugs of water that may cause significant variation of the delivered mass flow rate with respect to time. It may also be beneficial to avoid excess superheating, in order to limit the total power consumption of the system 200. For example, the steam may be superheated by an amount ranging from about 10 °C to about 100 °C.

In some embodiments, a small amount of liquid water (e.g., from about 0.5% to about 2% of incoming water) may be periodically or continuously discharged from the steam generator 104 via a liquid discharge conduit 224. In particular, the discharged liquid water may include scale and/or other mineral impurities that may accumulate in the steam generator 104 while vaporizing water to generate steam. Therefore, this discharged liquid water is not desirable for being recycled into the water inlet stream from the water source 50. This liquid discharge may be mixed with the hot oxygen exhaust stream output from the water preheater 102 into an exhaust conduit 205. If the hot oxygen exhaust stream has a temperature above 100 °C, the liquid water discharge may be evaporated by the hot oxygen exhaust stream, such that no liquid water is required to be discharged from the system 200. The system 200 may optionally include a water pump 124 configured to pump and regulate the liquid water discharge in the liquid discharge conduit 224 output from the steam generator 104 into the exhaust conduit 205 from the water preheater 102. Optionally, a flow regulator, such as proportional solenoid valve, may be added to the liquid discharge conduit 224 in addition to the pump 124 to additionally regulate the flow of the liquid water discharge.

Blowdown from the steam generator 104 may be beneficial for long term operation, as the water will likely contain some amount of mineralization after deionization. Typical liquid blowdown may be on the order of 1%. The blowdown may be continuous, or may be intermittent, e.g., ten times the steady state flow for 6 seconds out of every minute, five times the steady state flow for 1 minute out of every 5 minutes, etc. The need for a water discharge stream can be eliminated by pumping the blowdown into the hot oxygen exhaust. In this case, the pump 124 and liquid discharge conduit 224 may be omitted.

The steam output from the steam generator 104 may be provided to the steam recuperator 108 via a steam conduit 204. However, if the system 200 includes the optional mixer 106, the steam may be provided to the mixer 106 prior to being provided to the steam recuperator 108 via steam and hydrogen conduit 206. In particular, the steam may include small amounts of dissolved air and/or oxygen. The mixer 106 may be configured to mix the steam with hydrogen gas, in order to maintain a reducing environment in the stack 100, and in particular, at the fuel electrodes 7.

The mixer 106 may be configured to mix the steam with hydrogen received from a hydrogen storage device (e.g., hydrogen storage vessel) 52 and/or with a portion of the hydrogen and steam recycle stream output from the stack 100. The hydrogen addition rate may be set to provide an amount of hydrogen that exceeds an amount of hydrogen needed to react with an amount of oxygen dissolved in the steam. The hydrogen addition rate may either be fixed or set to a constant water to hydrogen ratio. However, if the steam is formed using water that is fully deaerated, the mixer 106 and/or hydrogen addition into the steam may optionally be omitted.

In some embodiments, the hydrogen may be provided to the mixer 106 during system start-up and shutdown modes, and optionally during steady state operation modes. For example, during the start-up and shutdown modes (or other modes where the system 200 is not generating hydrogen, such as a fault mode), the hydrogen may be provided to the mixer 106 from the hydrogen storage device 52 via a stored hydrogen conduit 252. In an alternative embodiment described below, in voltage controlled start-up, shutdown and process stop modes, no external hydrogen is provided to the mixer 106 and the stack 100.

During the steady state operating mode, the hydrogen flow from the hydrogen storage device 52 may be stopped (e.g., by shutting off an outlet valve from the hydrogen storage device (not shown)). A first portion of a hydrogen exhaust stream (e.g., the hydrogen and steam product steam) generated by the stack 100 is diverted to the mixer 106 through the hydrogen recycle conduit 226 by the recycle blower 126. In particular, the system 200 may include a hydrogen separator 122, such as a splitter and/or valve, configured to selectively divert a portion of the hydrogen exhaust stream flowing through the hydrogen product conduit 220 to the mixer 106 during the steady state mode operation.

The mixed steam and hydrogen inlet stream is provided from the mixer 106 into a steam recuperator heat exchanger 108 via a steam and hydrogen conduit 206. The mixed steam and hydrogen inlet stream in conduit 206 may have a temperature above 100 °C, such as 120 °C to 140 °C. The mixed steam and hydrogen inlet stream is heated in the steam recuperator 108 by the hydrogen exhaust (i.e., the hydrogen and steam product stream) provided from the stack 100. The hydrogen exhaust may be provided from the stack 100 to the steam recuperator 108 via a hydrogen outlet conduit 210. The heated mixed steam and hydrogen inlet stream is provided from the steam recuperator heat exchanger 108 into the fuel side inlet of the stack 100 via the fuel inlet conduit 208. The mixed steam and hydrogen inlet stream in the fuel inlet conduit 208 may have a temperature above 500 °C, such as 550 °C to 600 °C.

The hydrogen exhaust is output from the hotbox 300 (e.g., from the steam recuperator 108 and/or the optional air preheater 54) into the hydrogen product conduit 220 at a temperature of 150 °C to 250 °C. A second portion of the hydrogen exhaust that is not diverted by the hydrogen separator 122 into the mixer 106 continues through the hydrogen product conduit 220 into the hydrogen processor 120. The hydrogen exhaust may be compressed and/or purified in the hydrogen processor 120. The hydrogen processor 120 may include a high temperature hydrogen pump that operates at a temperature from about 120 °C to about 200 °C, in order to remove from about 70% to about 90% of the hydrogen from the hydrogen exhaust. The removed hydrogen is stored and/or provided for one or more end uses. In one embodiment, the hydrogen processor 120 includes an electrochemical hydrogen pump, a liquid ring compressor, a diaphragm compressor or combination thereof. For example, the hydrogen processor may include a series of electrochemical hydrogen pumps, which may be disposed in series and/or in parallel with respect to a flow direction of the hydrogen exhaust, in order to compress the hydrogen exhaust. The final product from compression may still contain traces of water. As such, the hydrogen processor 120 may optionally include a dewatering device, such as a condenser, a temperature swing adsorption reactor or a pressure swing adsorption reactor, to remove this residual water, if necessary.

The air recuperator heat exchanger 112 may be provided with ambient air by an air blower 118 via an air inlet conduit 218 and an optional preheated air conduit 254. The oxygen exhaust output from the stack 100 may be provided to the air recuperator 112 via an oxygen outlet conduit 222. The air recuperator 112 may be configured to heat the incoming air using heat extracted from the stack oxygen exhaust (i.e., the oxygen enriched air). The air inlet stream may be heated in the air recuperator 112 to a temperature above 500 °C, such as 550 °C to 600 °C. The heated air inlet stream is provided from the air recuperator 112 to the air inlet of the stack 100 via the stack air inlet conduit 212. The oxygen exhaust is output from the air recuperator 112 to the water preheater 102 via the oxygen exhaust conduit 228 at temperature above 200 °C, such as 250 °C to 350 °C. The oxygen exhaust is output from the water preheater 102 via the exhaust conduit 205 at temperature of at least 80 °C.

According to various embodiments, the system 200 may include an optional air preheater heat exchanger 54 disposed outside or inside of the hotbox 300. In particular, the air preheater 54 may be configured to preheat the air inlet stream provided to the hotbox 300 by the air blower 118 via the air inlet conduit 218 using heat in the hydrogen exhaust (i.e., the hydrogen and steam product stream) from the stack 100. The air may be preheated in the air preheater to a temperature above 100 °C, such as 150 °C to 250 °C. The hydrogen exhaust stream may be provided from the steam recuperator 108 to the air preheater 54 via a hydrogen conduit 238.

According to various embodiments, the system 200 may include a controller 125, such as a central processing unit, which is configured to control the operation of the system 200. For example, the controller 125 may be wired or wirelessly connected to various elements of the system 200 to control the same. The controller 125 may control various process fluid and power flows in the system 200 by adjusting valve positions (e.g., opening and closing valves), blower speeds, and power converters (e.g., DC-DC converters). The controller 125 may be configured with various operating modes including energy saving modes. For example, various elements in system 200 may be switched off to preserve energy while maintaining the SOEC stack 100 at a relatively high temperature.

According to various embodiments, the SOEC stack 100 may most efficiently generate hydrogen at an operating temperature ranging from about 700 °C to 900 °C, such as from about 725 °C to about 775 °C, or about 750 °C. In order to maintain the stack operating temperature, fluids provided to the stack 100 may be heated by various components prior to being provided to the stack 100. The heaters 350, 360, 370 improve the temperature control of the system.

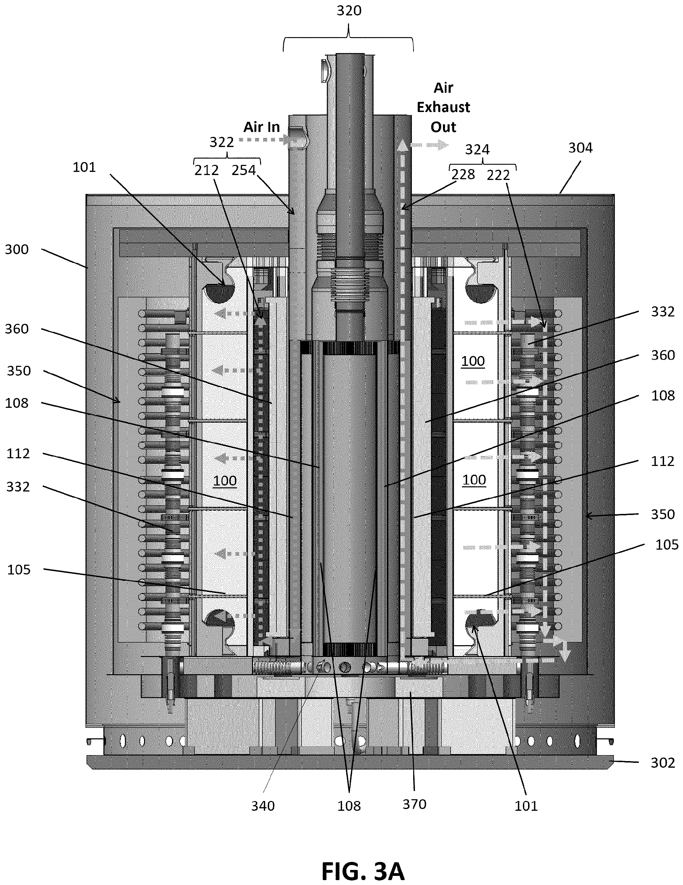

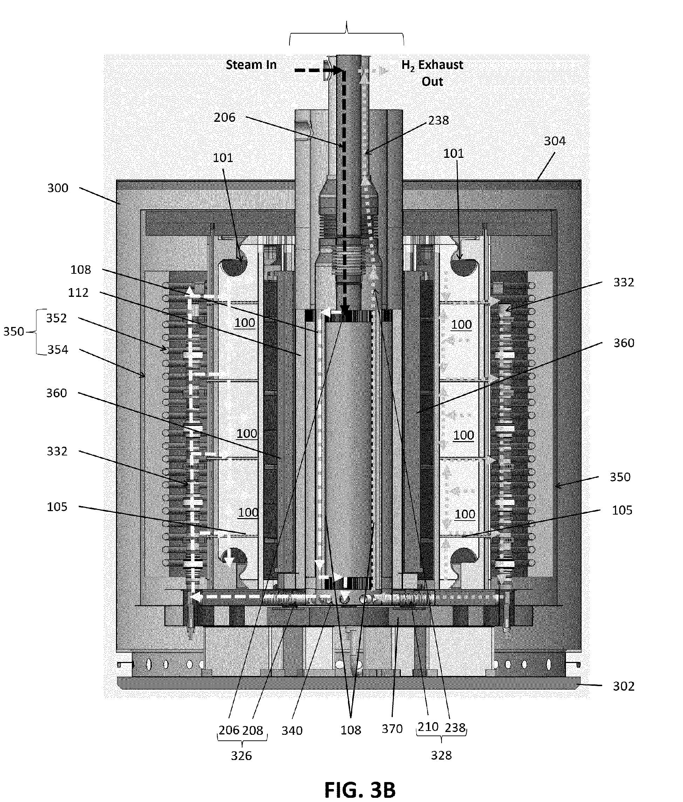

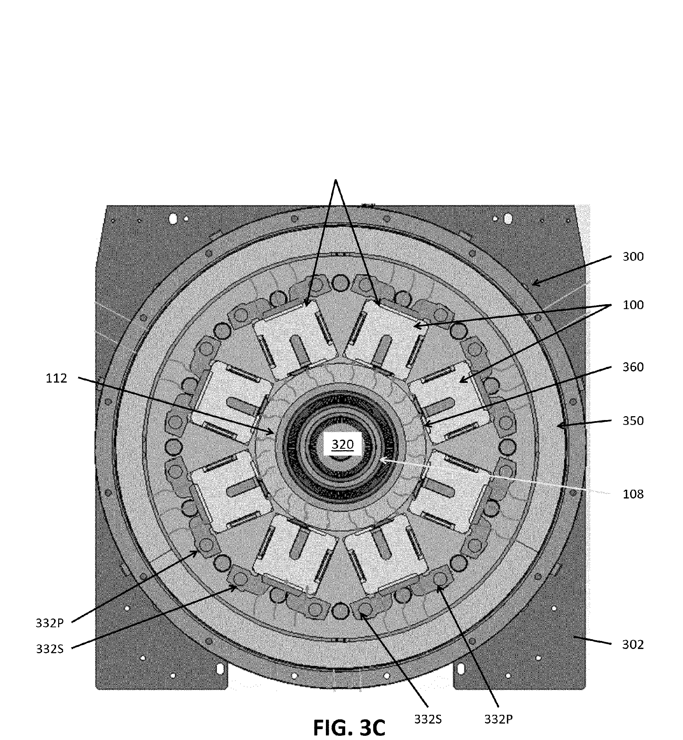

FIGS. 3A and 3B are cross-sectional views showing air flow and steam and hydrogen flow in the hotbox 300 of the electrolyzer system 200 of FIG. 2, according to various embodiments of the present disclosure. FIG. 3C is a top view showing aspects of heat transfer in the hotbox 300 of FIG. 2, according to various embodiments of the present disclosure.

Referring to FIGS. 3A-3C, the hotbox 300 may be disposed on an optional support base 302 and may include an optional cover plate 304. The support base 302 may comprise hollow rails which provide access for a forklift to raise and move the hotbox 300. The hotbox 300 includes a central column 320, the outer column heater 350, the inner column heater 360, and the base heater 370, which may be disposed in the hotbox 300. In particular, the central column 320 may protrude through an opening in the cover plate 304 of the hotbox 300.

The central column 320 may include the steam recuperator 108 and the air recuperator 112. In various embodiments, the air recuperator 112 may be located radially outward from and concentrically surround the steam recuperator 108. It is believed that this configuration may provide a high heat transfer efficiency. However, in an alternative embodiment, the air recuperator 112 may optionally be located radially inward from and be laterally surrounded by the steam recuperator 108 instead. Thus, both the steam recuperator 108 and the air recuperator 112 are located radially inward of the stacks 100 or cell columns 101. The central column 320 may also include an air conduit 322, an air exhaust conduit 324, a steam conduit 326 (see FIG. 3B), and a product conduit 328 (see FIG. 3B). The air conduit 322 comprises the combination of the preheated air conduit 254 and the stack air inlet conduit 212. The air exhaust conduit 324 comprises the combination of the oxygen outlet conduit 222 and the oxygen exhaust conduit 228. The steam conduit 326 comprises the combination of the steam and hydrogen conduit 206 and the fuel inlet conduit 208. The product conduit 328 comprises the combination of the hydrogen outlet conduit 210 and the hydrogen conduit 238.

The cell columns 101 may each include one stack 100 or plural stacks 100 stacked over each other. The cell columns 101 surround the central column 320. The cell columns 101 may optionally include fuel manifolds 105 (e.g., steam splitter plates) disposed between the stacks 100. The manifolds 105 may be configured to provide steam to adjacent stacks 100 in the same column 101 and receive the hydrogen product output from adjacent stacks 100 in the same column 101. The manifolds 105 of each cell column 101 may be fluidly connected to riser conduits 332 configured to provide the steam to and collect the hydrogen exhaust from the cell columns 101. The riser conduits 332 may include steam riser conduits 332S configured to provide the steam inlet stream to the cell columns 101, and product riser conduits 332P configured to collect the hydrogen exhaust stream (i.e., the hydrogen product stream) output from the cell columns 101, as shown in FIG. 3C.

Thus, the cell columns 101 and/or stacks 100 may be internally manifolded for steam/hydrogen and externally manifolded for oxygen/air. As noted above, the steam inlet stream may also include hydrogen, and the hydrogen product may also include unreacted steam. Alternatively, each cell column 101 may include only one stack 100 containing interconnects which are internally manifolded for steam/hydrogen delivery such that the manifolds 105 and riser conduits 332 may be omitted.

The inner column heater 360 may be disposed between the central column 320 and the cell columns 101 (e.g., one or more stacks 100). In particular, an inner surface of the inner column heater 360 may face the steam recuperator 108 and the air recuperator 112, and an outer surface of the inner column heater 360 may face the stacks 100 or columns 101. The outer column heater 350 may surround the stacks 100 or columns 101. In particular, an inner surface of the outer column heater 350 may face the stacks 100. Thus, the stacks 100 or columns 101 are located radially inward from the outer column heater 350 and radially outward from the inner column heater 360. The steam recuperator 108 and the air recuperator 112 are located radially inward from the inner column heater 360.

As shown in FIG. 3A, in operation, an incoming air inlet stream is provided through the air conduit 322 (e.g., through the preheated air conduit 254) to the top of the air recuperator 112. The air inlet stream may be heated while passing through the air recuperator 112, before exiting the bottom of the air recuperator 112. After exiting the air recuperator 112, the air inlet stream may flow upward through the stack air inlet conduit 212 to the inner facing surfaces of the stacks 100 or columns 101. The inner column heater 360 may heat the air inlet stream in the stack air inlet conduit 212. The air inlet stream may enter the open inner surfaces of the stacks 100 or columns 101 that face the central column 320. The air inlet stream may flow to the surface of the SOEC air electrodes 3 in the stacks 100 or columns 101 via the air channels 8B in the interconnects 10 (see FIG. 1B). Oxygen ions are generated from the steam inlet stream at the fuel electrodes 7 by a voltage applied to the stacks 100 and may pass through the SOEC electrolytes 5 and may recombine to form oxygen gas (O₂) at the air electrodes 3. The oxygen gas is swept away by the air inlet stream flowing through the air channels 8B in the stacks 100 or columns 101. The oxygen enriched air (e.g., oxygen/air exhaust) stream then exits outer surfaces of the stacks 100 or columns 101, flows downward through the oxygen outlet conduit 222 toward the bottom of the hotbox 300, and then flows into the bottom of the air recuperator 112. The outer column heater 350 may heat the oxygen enriched air in the oxygen outlet conduit 222. The air recuperator 112 extracts heat from the oxygen exhaust stream as it flows upward through the air recuperator 112, to heat the incoming air inlet stream.

As shown in FIG. 3B, in operation, steam and/or a steam/hydrogen mixture is provided to the central column 320 and flows downward through the steam conduit 326 (e.g., through the steam and hydrogen conduit 206) to the steam recuperator 108. The steam recuperator 108 may be a heat exchanger configured to recover heat from the hydrogen exhaust stream output from the stacks 100 or columns 101. As such, the steam recuperator 108 may be configured to increase the efficiency of the system 200.

The heated steam inlet stream may exit the bottom of the steam recuperator 108 and enter the distribution hub 340. The steam inlet stream may then flow through the fuel inlet conduits 208 to the corresponding riser conduits 332 (e.g., steam riser conduits 332S), which provide the steam inlet stream to the stacks 100 or columns 101. The steam and/or the steam/hydrogen mixture (i.e., the steam inlet stream) flowing through the fuel inlet conduits 208 is heated by the base heater 370 located adjacent to the distribution hub 340. The steam and/or the steam/hydrogen mixture flows to the SOEC fuel electrodes 7 in the stacks 100 or columns 101 via the fuel channels 8A in the interconnects 10. The SOECs in the stacks 100 or columns 101 may convert at least a portion of the steam into hydrogen to generate a hydrogen exhaust stream (i.e., product stream) that may also comprise unreacted steam. The hydrogen exhaust stream may be output from the stacks 100 or columns 101 to the corresponding riser conduits 332 (e.g., product riser conduits 332P). The hydrogen exhaust stream may be provided from the product riser conduits 332P to the distribution hub 340 by the hydrogen outlet conduits 210, which may provide the hydrogen exhaust stream to the bottom of the steam recuperator 108. The hydrogen exhaust stream flowing through the hydrogen outlet conduits 210 is heated by the base heater 370 located adjacent to the distribution hub 340. The hydrogen exhaust stream may flow up through the steam recuperator 108, which may transfer heat from the hydrogen exhaust stream to the incoming steam inlet stream flowing therethrough in the opposite direction. The hydrogen exhaust stream may exit the top of the steam recuperator 108 and enter the hydrogen conduit 238 and then exit the central column 320.

In various embodiments, in order for the recuperators 108, 112 to provide high steam and air flow rates and a low pressure drop while also fitting within the space available in the hotbox 300, the temperature of the output steam inlet stream and/or air inlet stream may be less than a desired operating temperature of the stacks 100 or columns 101. Accordingly, the heaters 350, 360, 370 may be used to supplement that heating provided by the recuperators 108, 112.

For example, the heaters 350, 360, 370 may be configured to heat the air inlet stream, the steam/hydrogen stream (i.e., the steam inlet stream), the hydrogen exhaust stream and/or the oxygen enriched air stream (i.e., oxygen exhaust stream) such that the steam inlet stream and the air inlet stream are provided to the stacks 100 or columns 101 at temperatures as close as possible to the operating temperature of the stack, such as at temperatures ranging from about 700 °C to about 900 °C, such as from about 725 °C to about 850 °C, or about 750 °C. However, higher temperatures may also be used.

In various embodiments, the heaters 350, 360, 370 may include electric heating elements, such as resistive or inductive heating elements which may be embedded in thermal insulation layers. In some embodiments, the heaters 350, 360, 370 may preferably comprise heating elements disposed in a ceramic fiber insulation material, in order to provide longer heater life. For example, as shown in FIG. 3B, the outer column heater 350 may include one or more heating elements 352 embedded in a tubular insulation layer 354, which may be formed of ceramic fibers.

In some embodiments, the heaters 350, 360, 370 may include different heating zones in order to provide improved temperature control. For example, the column heaters 350, 360 may have upper, middle, and lower zones, including independently controllable heating elements, in order to heat upper, middle, and lower portions of the stacks 100 at different temperatures, depending on the temperature requirements of different portions of the stacks 100.

In various embodiments, the outer column heater 350 may be disposed along the perimeter of the hotbox 300 and may be configured to radiate heat inward toward the central column 320 and the cell columns 101. For example, the outer column heater 350 may be configured to radiate heat toward the outer surfaces of the stacks 100, columns 101 and/or the riser conduits 332. Accordingly, the outer column heater 350 may be configured to heat the stacks 100 or columns 101 and fluids flowing through the riser conduits 332. The base heater 370 may be configured to heat fluids flowing through the distribution hub 340. For example, the base heater 370 may directly or indirectly heat the conduits 208 and 210 to heat the fluids flowing therethrough. For example, the base heater 370 may be configured to heat a steam/hydrogen mixture (i.e., the steam inlet stream) flowing through the fuel inlet conduits 208 up to the stack operating temperature. In some embodiments, the base heater 370 may also heat the hydrogen exhaust stream flowing through the hydrogen outlet conduits 210, in order to increase the amount of heat transferred to the steam inlet stream in the steam recuperator 108.

For example, depending on the health of the stacks 100, the water utilization rate of the stacks 100, and the air flow rate to the stacks 100, the outer column heater 350 and/or base heater 370 may heat steam or steam/hydrogen mixture provided to the stacks 100 to a temperature ranging from about 700 °C to about 900 °C, such as 725 °C to 800 °C, or about 750 °C. In some embodiments, the outer column heater 350 and/or base heater 370 may increase the temperature of the steam output from the steam recuperator 108 by an amount ranging from about 50 °C to about 300 °C, such as from about 75 °C to about 200 °C, or from about 100 °C to about 150 °C. Accordingly, the stacks 100 may be provided with steam or a steam-hydrogen mixture having a temperature that allows for efficient hydrogen generation.

The inner column heater 360 may surround the central column 320, such that an outer surface of inner column heater 360 faces inner surfaces of the stacks 100 or columns 101 and an inner surface of the inner column heater 360 faces the central column 320 and/or the air recuperator 112. The inner column heater 360 may be configured to heat the stacks 100 or columns 101, for example, by radiating heat outward toward the inner surfaces of the stacks 100 or columns 101. The inner column heater 360 may also heat the air recuperator 112, in order to increase the temperature of the air inlet stream flowing along the outer surface of the air recuperator 112.

In some embodiments, the inner column heater 360 may be configured to heat the air inlet stream provided to the stacks 100 or columns 101, including air in the air recuperator 112 and/or the air inlet stream flowing through the hotbox 300, to a temperature ranging from about 700 °C to about 900 °C, such as 725 °C to 800 °C, or about 750 °C. For example, the inner column heater 360 may be configured to increase the temperature of the air inlet stream output from the air recuperator 112 by an amount ranging from about 100 °C to about 400 °C, such as from about 150 °C to about 350 °C, or from about 250 °C to about 275 °C.

Accordingly, the heaters 350, 360, 370 may be configured to heat the stacks 100 or columns 101, and/or steam inlet stream and air inlet stream provided to the stacks 100 or columns 101, to maintain a desired stack operating temperature and hydrogen production efficiency, without increasing a footprint and/or volume of the hotbox 300. Accordingly, the heaters 350, 360, 370 may beneficially allow for the use of relatively small recuperators 108, 112, while maintaining overall system space and hydrogen production efficiency.

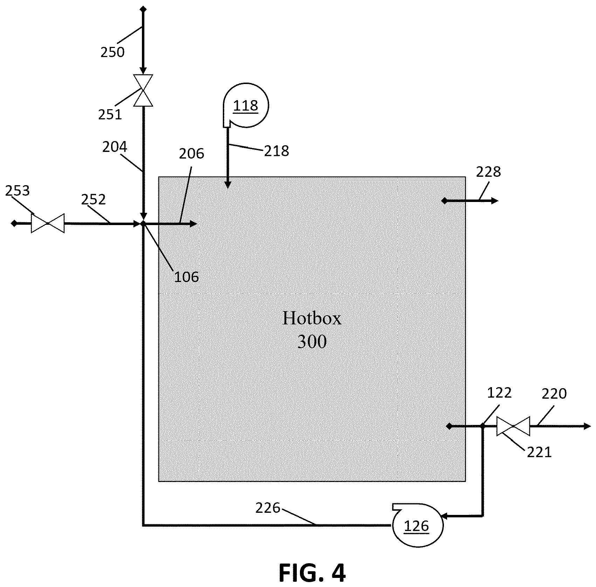

FIG. 4 is a schematic view of a portion of the system 200 of FIG. 2 operating in a standby mode, according to an embodiment. The hotbox 300 is shown schematically. In this embodiment, the water flow control device 251 may comprise a valve (e.g., a shut-off valve or another type of valve) located on the water inlet conduit 250 or on the steam conduit 204. In addition, a product valve 221 (e.g., a shut-off valve or another type of valve) is located on the hydrogen product conduit 220 downstream of the hydrogen separator (e.g., splitter) 122, and a hydrogen valve 253 (e.g., a shut-off valve or another type of valve) is located on the stored hydrogen conduit 252 or in the hydrogen storage device 52.

Many operational situations may warrant the electrolyzer system 200 to have its input or output conditions interrupted at the boundary of a given electrolyzer module which includes the hotbox 300. When a given electrolyzer module or hotbox 300 needs to be taken out of the steady state hydrogen production mode, the electrolyzer module may be switched to an isolated hot standby mode.

For the SOEC stack 100 shown in FIGS. 1A and 1B, the nickel mesh 13 and/or the nickel in the fuel electrode 7 (i.e., cathode) can oxidize in certain situations. For instance, oxidation can occur due to the inflow of atmospheric air to the fuel electrode 7 and the nickel mesh 13 when hydrogen is not present, oxygen is present, there is no electrolysis power, and the temperature is above an activation threshold. The nickel oxidation forms nickel oxide which causes expansion of the fuel electrode 7 and the nickel mesh 13. When the system is restarted and hydrogen flow to the fuel electrode 7 resumes, the nickel oxide is reduced to nickel which causes contraction of the fuel electrode 7 and the nickel mesh 13. Repeated expansion and contraction cycles can cause damage to the fuel electrode 7 and the nickel mesh 13.

The external hydrogen from the hydrogen storage device 52 may be supplied to the fuel electrode 7 during system shutdown to prevent nickel oxidation. However, this increases the cost of operating the electrolyzer system 200 because hydrogen can be expensive. Furthermore, restarting a SOEC system from room temperature may take a relatively long time, which increases system downtime. In addition, restarting the electrolyzer system 200 can be energy intensive including the electric power needed for heating process fluid flows and/or the stacks 100.

In various embodiments, hydrogen is provided to the fuel electrode 7 and the nickel mesh 13 of a SOEC stack 100 during an isolated hot standby mode to prevent nickel oxidation without using any external hydrogen from the hydrogen storage device 52. In the isolated hot standby mode, at least one of the heaters 350, 360 and/or 370 remains operational and the SOEC stack 100 or column 101 remains at an elevated temperature (e.g., above 400 °C). Hydrogen already present in the SOEC system conduits, fuel channels and riser channels is recycled to the fuel electrode 7 and the nickel mesh 13 of a SOEC stack 100 or column 101 located in the hotbox 300. The controller 125 may place the system 200 into isolated hot standby mode in response to a trigger condition. The trigger condition may include at least one of loss of steam or steam pressure, full hydrogen storage or process 120 downstream, maintenance on the hydrogen processor 120, power loss, a system restart request, or system maintenance.

As shown in FIG. 4, during the isolated hot standby mode, water flow control valve 251, the product valve 221 and the hydrogen valve 253 are all closed, while the air blower 118 and the recycle blower 126 remain operational. The recycle blower 126 recycles the steam and hydrogen product present in the various conduits (e.g., 238, 220, 226, 206), riser channels 22 and fuel channels 8A past the fuel electrodes 7 and the nickel meshes 13 in the SOEC stack 100 or column 101. Since the hydrogen and steam product cannot flow to the hydrogen processor 120 through the product conduit 220, all of the hydrogen present in the conduits and channels is repeatedly cycled past the fuel electrodes 7 and the nickel meshes 13.

Even if atmospheric air leaks to the fuel side of the SOEC stack 100 and/or oxygen is electrochemically transported through the electrolyte 5 from the air electrode 3 to the fuel electrode 7 of the SOEC 1 during the isolated hot standby mode, the oxygen reacts with hydrogen in the recycled product stream to form steam. Thus, the leaked air and/or electrochemically transported oxygen do not significantly oxidize the nickel in the fuel electrodes 7 and the nickel meshes 13, which reduces damage to the SOEC stack 100 components.

In the descriptions of various embodiments going forward, references are made to SOEC stack 100. It is understood that such references are equally applicable to embodiments utilizing SOEC column 101 as an SOEC column 101 including one or more SEOC stacks 100.

In one embodiment, the direct current (DC) or voltage (i.e., electric power) is not applied to the SOEC stack 100 during the isolated hot standby mode. The isolated hot standby mode may continue until there is insufficient hydrogen left in the recycled product stream. In other words, once a significant portion of the hydrogen reacts with the oxygen to form steam, additional leaked air and/or electrochemically transported oxygen may oxidize the nickel in the fuel electrodes 7 and the nickel meshes 13. Thus, the isolated hot standby mode in which direct current or voltage is not applied to the SOEC stack 100 has a finite duration, and the SOEC system 200 is restarted to operate in a steady state mode before the end of the isolated hot standby mode. Once the system 200 is restarted, direct current or voltage (i.e., electric power) is reapplied to the SOEC stack 100, and valves 251 and 221 are opened and the SOEC stack 100 receives external steam and generates the hydrogen containing product stream that is provided to the hydrogen processor 120.

In other embodiments, the direct current or voltage (i.e., electric power) is applied to the SOEC stack 100 either intermittently or continuously during the isolated hot standby mode to extend the duration of this mode before the SOEC system 200 is restarted. The isolated hot standby mode may be maintained so long as the stack temperatures remain within safe operating conditions to prevent nickel oxidation in the fuel electrodes.

The SOEC stack 100 may operate in the isolated hot standby mode where oxygen slowly leaks to the fuel electrode and hydrogen is slowly depleted as the hydrogen and steam product is continuously recirculated over the fuel electrode. Once the hydrogen has been depleted to a level where the SOEC cells are in danger of damage (e.g., low-hydrogen threshold), the controller 125 may switch the electrolyzer system 200 from the isolated hot standby mode to an isolated electrolysis mode. In the isolated electrolysis mode, the controller 125 applies the direct current or voltage to the SOEC stack 100 to regenerate the hydrogen in the recycled product stream.

Because the SOEC stack 100 is fluidly isolated from the hydrogen processor 120 in the isolated electrolyzer mode (i.e., the valves 221, 251 and 253 are closed), the steam in the recycled product stream is electrolyzed into hydrogen and oxygen, with the oxygen being transported across the electrolyte 5 from the fuel electrode 7 to the air electrode 3. The electrolysis increases the amount of hydrogen in the product stream which can react with the leaked oxygen if the direct current or voltage to the SOEC stack 100 is turned off. In this embodiment, the controller 125 applies the direct current or voltage to the SOEC stack 100 intermittently, such that the SOEC stack 100 operates alternately in the isolated hot standby mode (in which no direct current or voltage is applied to the SOEC stack 100) and in the isolated electrolysis mode (in which the direct current or voltage is applied to the SOEC stack 100). The blowers 118, 126 continue to operate and the valves 221, 251, 253 are closed in both the isolated hot standby mode and in the isolated electrolysis mode.

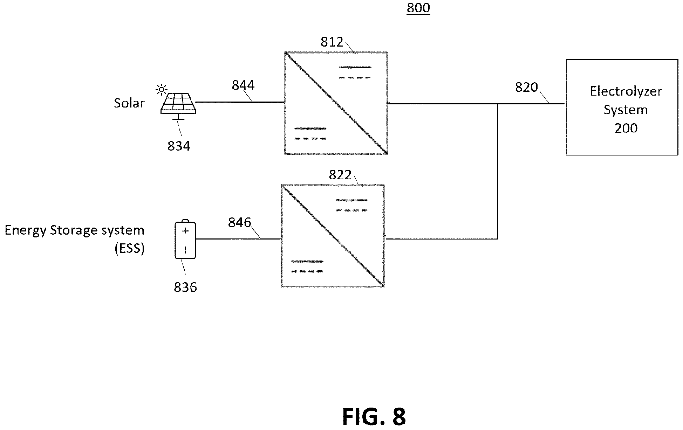

In another embodiment described below, an alternative electrolyzer system 800 is illustrated in FIG. 8. Thus, in various embodiments, a method of operating an electrolyzer system (200, 800) includes operating the electrolyzer system in a steady state mode by providing steam, heat and electric power to at least one stack 100 of electrolyzer cells 1 to electrolyze the steam and generate a hydrogen containing product stream that is provided to a hydrogen processor 120. The method also includes operating the electrolyzer system (200, 800) in an isolated hot standby mode by stopping the provision of the steam to the at least one stack 100 of electrolyzer cells 1, stopping the provision of the hydrogen containing product stream to the hydrogen processor 120, recycling the hydrogen containing product stream through the at least one stack 100 of electrolyzer cells 1 while providing the heat to the at least one stack 100 of electrolyzer cells 1, and not providing external hydrogen from outside the electrolyzer system to the at least one stack 100 of electrolyzer cells 1.

In one embodiment, the step of providing the heat comprises heating the at least one stack 100 of electrolyzer cells 1 using at least one heater (350, 360, 370); and the step of recycling the hydrogen containing product stream comprises using a recycle blower 126 to recycle the hydrogen containing product stream from an outlet of the at least one stack 100 of electrolyzer cells 1 through a recycle conduit 226 to an inlet of the at least one stack 100 of electrolyzer cells 1.

In one embodiment, the method further comprises operating the electrolyzer system (200, 800) in a start-up mode by providing the external hydrogen from outside the electrolyzer system to the at least one stack 100 of electrolyzer cells 1. The external hydrogen is provided from a hydrogen storage device 52 to the at least one stack 100 of electrolyzer cells 1 through an open hydrogen valve 253 and a stored hydrogen conduit 252 during the start-up mode. The steam is provided to the at least one stack 100 of electrolyzer cells 1 through an open water control valve 251 and a steam conduit 204 from a steam source (e.g., the water source 50 and/or steam generator 104) during the steady state mode. The hydrogen containing product stream is provided from the at least one stack 100 of electrolyzer cells 1 to the hydrogen processor 120 through an open product valve 221 and a product conduit 220 during the steady state mode. In one embodiment, the hydrogen valve 253, the water control valve 251 and the product valve 221 are closed in the isolated hot standby mode to fluidly isolate the at least one stack 100 of electrolyzer cells 1 from the hydrogen storage device 52, the steam source (50/204) and the hydrogen processor 120. The hydrogen valve 253 may be either open or closed during the steady state mode to optionally provide the external hydrogen to the at least one stack 100 of electrolyzer cells 1, as needed during the steady state mode.

In an alternative embodiment, no external hydrogen is provided to the stack 100 during a voltage controlled start-up mode. In the voltage controlled start-up mode, the hydrogen valve 253 is closed, and the product valve 221 is open. External electric power (e.g., external voltage) is applied to the stack 100 and stack heaters are activated to heat the stack 100. The stack heaters heat the stack 100 from an initial temperature (e.g., room temperature) to a desired steady state temperature at which the system reaches the steady state operating mode. The water control valve 251 may be initially closed and then opened when the stack is sufficiently hot to accept the steam and electrolyze the steam as needed using the external electric power.

In another alternative embodiment, no external hydrogen is provided to the stack during a voltage controlled shutdown mode. The voltage controlled shutdown mode may comprise a voltage controlled gradual cool down mode or a voltage controlled process stop mode. In both the voltage controlled gradual cool down mode and the voltage controlled process stop mode, the external electric power (e.g., external voltage) is applied to the stack 100, the stack heaters are deactivated (i.e., turned off) so that they do not heat the stack 100, the hydrogen valve 253 is closed and the product valve 221 is open. Thus, the hydrogen containing product is provided from the stack 100 and the hotbox 300 through the product valve 221 to the hydrogen product conduit 220.

In the voltage controlled gradual cool down mode, the water control valve 251 is open, and steam is provided to the stack 100 through the open water control valve, such that hydrogen is generated using electrolysis from the steam during the gradual stack 100 cool down, before the system is turned off and all valves are closed once the system reaches the desired temperature (e.g., room temperature). In contrast, in the voltage controlled process stop mode, the water control valve 251 is closed, and no external steam is provided to the stack 100. This maintains stack 100 health despite the stack 100 not being fully operational to avoid maintaining the stack 100 in potentially oxidizing conditions while the stack 100 cools, which may oxidize metal (e.g., nickel) in cermet fuel electrodes of the cells in the stack 100, which may cause the fuel electrodes to change their volume and cause cracks in the cells.

Thus, in some embodiments, the electrolyzer system may also be operated in a voltage controlled shutdown mode by providing electric power to the at least one stack of electrolyzer cells 100, providing the hydrogen containing product stream to the hydrogen processor 120, recycling the hydrogen containing product stream through the at least one stack of electrolyzer cells 100 without providing the heat to the at least one stack of electrolyzer cells 100, and not providing external hydrogen from outside the electrolyzer system to the at least one stack of electrolyzer cells 100. In one embodiment, the voltage controlled shutdown mode comprises a voltage controlled gradual cool down mode in which the steam is provided to at least one stack of electrolyzer cells 100. In another embodiment, the voltage controlled shutdown mode comprises a voltage controlled process stop mode in which the steam is not provided to at least one stack of electrolyzer cells 100.

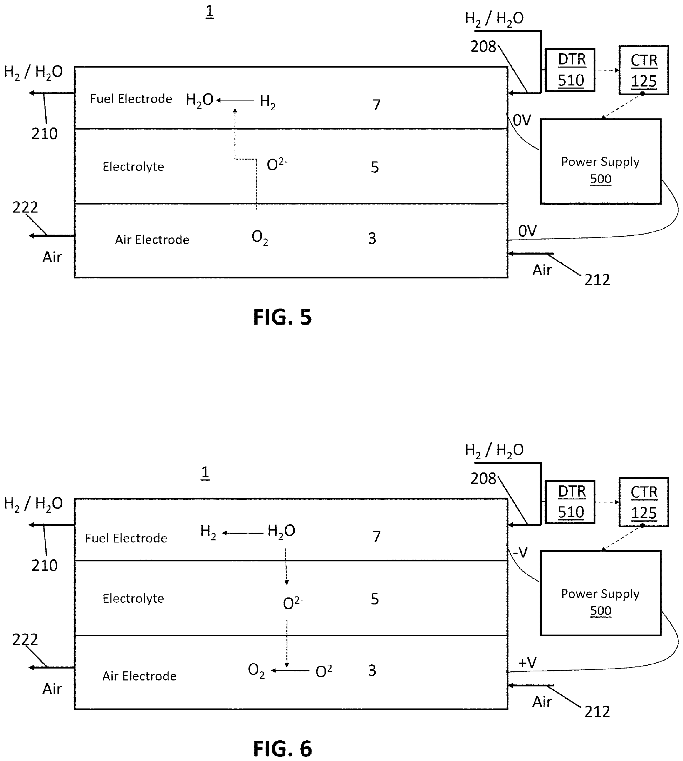

FIG. 5 is a diagram showing a SOEC cell 1 of the SOEC stack 100 operating in the isolated hot standby mode. The power supply (e.g., DC/DC converter) 500 does not apply any DC or voltage between the air electrode and fuel electrode. The hydrogen and steam product stream circulate over the fuel electrode 7 and the oxygen enriched heated air recirculates over the air electrode 3. In the isolated hot standby mode, the hydrogen and steam product stream may be provided to the fuel electrode 7 via conduit 208, and is exhausted via conduit 210. The recycle blower 126 recirculates the entire hydrogen and steam product stream from conduit 210 back to conduit 208. The air is provided to the air electrode 3 via conduit 212 and is exhausted via conduit 222. FIG. 5 shows the electrochemical oxygen ion transport through the electrolyte 5 from the air electrode 3 to the fuel electrode 7 to convert the hydrogen at the fuel electrode 7 to steam in the isolated hot standby mode.

In one embodiment, a hydrogen detector (e.g., a gas composition sensor) 510 in data communication with the controller 125, and located in any of the conduits 208, 210, 220, 226 and/or 206 may monitor the hydrogen level in the recycled product stream. When the detector 510 detects that the hydrogen level in the recycled product stream is below a low threshold (e.g., a low-hydrogen threshold), the controller 125 may receive the detected hydrogen level and switch the SOEC stack 100 from the isolated hot standby mode to the isolated electrolysis mode to increase the hydrogen concentration in the recycled product stream.

FIG. 6 is a diagram showing the SOEC cell 1 of the SOEC stack 100 operating in the isolated electrolysis mode. In this mode, the power supply 500 applies a DC or voltage across the electrolyzer cell 1 that electrochemically separates the steam at the fuel electrode 7 into hydrogen and oxygen ions. The oxygen ions are transported across the electrolyte 5 from the fuel electrode 7 to the air electrode 3. When the detector 510 detects that the hydrogen level in the recycled product stream is above a high hydrogen threshold, the controller 125 may receive the detected hydrogen level and switch the SOEC stack 100 from the isolated electrolysis mode back to the isolated hot standby mode.

This cycle may continue repeatedly and may be assisted by one or more heaters 350, 360 and/or 370 which remain on during both the isolated electrolysis mode and isolated hot standby mode to maintain sufficiently high operating temperatures when the electrolyzer module is isolated for multiple cycles. Hydrogen generation for the isolated electrolysis mode may require less electric power than that needed for net hydrogen production.

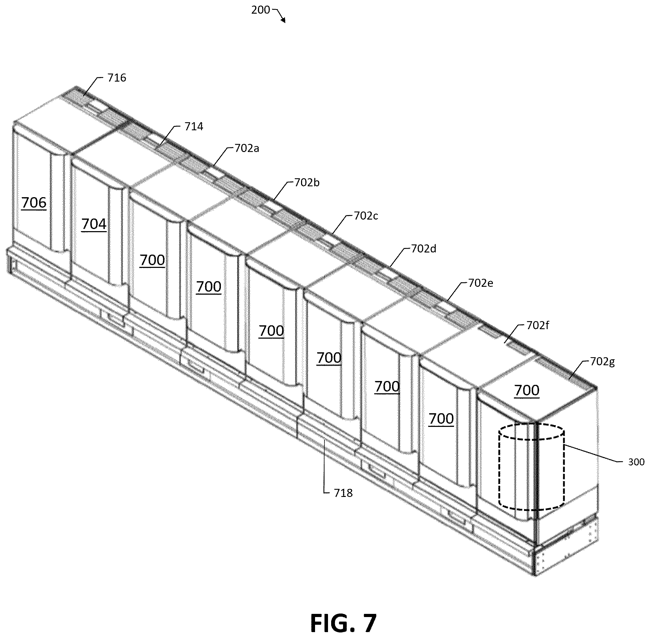

FIG. 7 is a perspective view of an electrolyzer system 200 according to an embodiment of the present disclosure. The system 200 may comprise a modular system in which the system components are located in separate module cabinets 702a-702g, 714 and 716. The system 200 includes electrolyzer (i.e., hydrogen generation) modules 700 located in respective cabinets 702a-702g. Each electrolyzer module 700 located in a respective cabinet 702a-702g comprises a hotbox 300 and balance of plant components (e.g., valves, conduits, blowers, sensors, etc.). The hotbox 300 houses one or more electrolyzer cell stacks 100 or stack columns 101 and various heat exchangers and electrolyzer heaters that are described above with respect to FIG. 2.

The system also includes at least one power conditioning module 704 and at least one gas distribution module 706. A module cabinet 714 contains the power conditioning module 704 containing electrical components, such as a rectifier. The power conditioning module 704 may also include DC-DC converters. Alternatively, dedicated electrolyzer module 700 DC-DC converters may be located in each respective module cabinet 702a - 702g. Thus, the power conditioning components, such as DC-DC converters, may be located in the cabinet 714 for the power conditioning module 704, in the cabinets 702a-702g for the electrolyzer modules 700, or in both the cabinet 714 for the power conditioning module 704 and in the cabinets 702a-702g for the electrolyzer modules 700. The module cabinet 716 contains a gas distribution module 706 including steam processing and control components for the electrolyzer system 200. In one embodiment, the module cabinets 702a-702g, 714 and/or 716 are located on the same base 718. Alternatively, the cabinet 716 may be located on a separate base. The base 718 may comprise a concrete base and/or a skid containing passages for various fluid and electrical connections between the cabinets.

FIG. 8 illustrates a circuit diagram of a system 800 including the electrolyzer system 200 and two or more power sources 834, 836 for powering the electrolyzer system 200. The electrolyzer system 200 includes at least one electrolyzer cell stack 100 (or column of stacks), and may include a plurality of electrolyzer cell stacks 100 (or columns of stacks) located in plural hotboxes 300, which are located in separate electrolyzer modules 700, as shown in FIG. 7. The power sources include an intermittent power source 834 and an energy storage system (ESS) 836.

The intermittent power source 834 may comprise a solar, wind, geothermal, tidal, or another intermittent power source. For example, the solar intermittent power source may comprise a photovoltaic panel power source or a concentrated solar power source which concentrates solar power using mirrors and/or lenses onto a receiver, such as heat engine (e.g., steam turbine). The wind intermittent power source may comprise a wind turbine. The geothermal intermittent power source may comprise a geothermal power plant. The tidal intermittent power source may comprise a tidal generator which converts tidal water flows into electricity. The ESS 836 may comprise a battery, an ultracapacitor (i.e., supercapacitor), a mechanical (e.g., flywheel) ESS, a pumped hydro ESS or combination thereof.

The intermittent power source 834 and the ESS 836 are electrically connected to the electrolyzer system 200 via their respective power converters 812, 822 and a common direct current (DC) power bus 820. The intermittent power source 834 is electrically connected to its power converter 812 via a first electrical bus 844, and the ESS 836 is electrically connected to its power converter 822 via a second electrical bus 846. The power converters 812, 822 may comprise DC-DC converters for DC power sources, such as a photovoltaic solar intermittent power source 834 and/or a battery ESS 836. For alternating current (AC) power sources, such as a wind turbine intermittent power source 834 and/or a flywheel ESS 836, the power converters 812 and/or 822 may also include AC-DC inverters. The power converters 812, 822 may be located in the power conditioning module 704, in the electrolyzer modules 700, in both modules 704 and 700, and/or outside the electrolyzer system 200 shown in FIG. 7. The ESS 836 may be located in the power conditioning module 704 and/or outside the electrolyzer system 200 shown in FIG. 7.

In one embodiment, the system 800 may comprise a grid isolated system, in which electric power from an electric power grid is not available. For example, the system 800 may be located in a remote location in which a power grid is not available. In another example, the system 800 may be electrically connected to a power grid, but the electrolyzer system 200 is at least temporarily disconnected from the power grid and operates using only power from the intermittent power source 834 and/or the ESS 836 (e.g., due to grid outage and/or a brownout). Thus, in this embodiment, the electrolyzer system 200 is not electrically connected to a power grid.

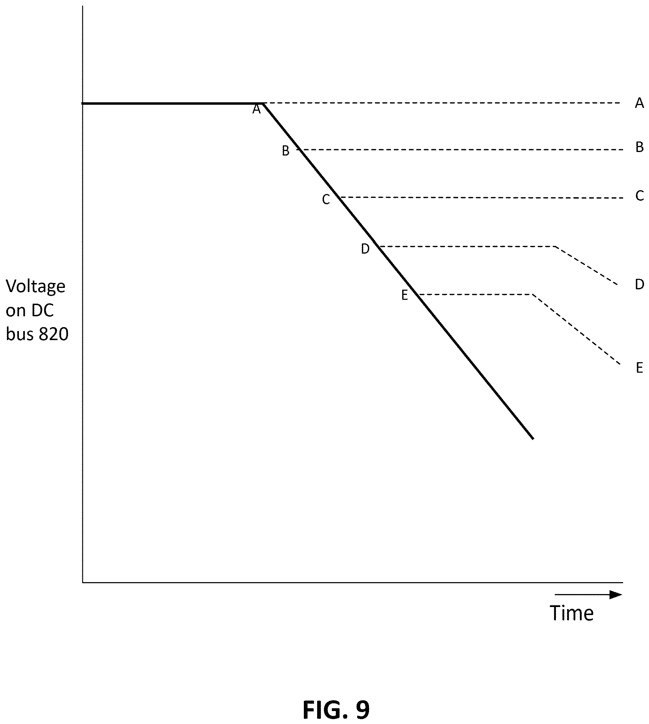

FIG. 9 illustrates power curtailment of DC bus 820 voltage and various times where adjustments in the electrolyzer system 200 can be made to prevent its complete shutdown. A nominal DC voltage on the DC bus 820 may be indicated by level A. For example, level A may indicate a rated hydrogen production voltage for the electrolyzer system 200 (e.g., voltage required for a predetermined steady-state mode hydrogen production level). A voltage reduction on the DC bus 820 to level B may cause the controller 125 of the electrolyzer system 200 to reduce voltage to the stack 100 to reduce the level of hydrogen production by electrolysis.

A voltage reduction on the DC bus 820 to level C may cause the controller 125 of the electrolyzer system 200 to enter the hot standby operating mode by turning off power to the stack 100 and terminate hydrogen production by electrolysis, while maintaining power to the heaters and other electrolyzer system 200 components to prevent oxidation of nickel in the electrolyzer cell 1 fuel electrodes 7.

A voltage reduction on the DC bus 820 to level D may cause the controller 125 of the electrolyzer system 200 to close off valves and turn off the heaters while preserving safety critical components. For example, the controller may initiate the isolated hot standby mode or begin a cooling process of the stack 100 to prepare for shutdown. A voltage reduction on the DC bus 820 to level E may cause the controller 125 of the electrolyzer system 200 to initiate a shutdown of the electrolyzer system 200.

Various implementations may facilitate a priority of turning off or shutting down components of the electrolyzer system 200 by providing program instructions that correspond to power drop magnitude so that the controller 125 may respond to the power drop in a controlled manner to maintain the operation of the safety critical components as long as possible. When the voltage on the DC bus 820 is dropping due to a mismatch between the voltage supply and the load voltage demand, one or more of the DC/DC converters in the power conditioning module 704 and/or in the electrolyzer modules 700 may reduce the power to the stack 100 to reduce the load on the DC bus 820 in response to a determined current or power drop on the DC bus 820. If available voltage continues to drop on the DC bus 820, then power to the stack 100 may be reduced further, which may include a shutdown process of the electrolyzer system 200. Where the intermittent power source 834 is the primary power source for the electrolyzer system 200, the controller 125 may cycle from between level A and level D and back to level A (or level B) based on the power output from the intermittent power source 834 and/or the ESS 836 (if any stored energy remains in the ESS).

In various embodiments, the system 800 is operated to maintain the temperature of the stack 100 (or stack column) and reduce thermal cycling that impacts the lifespan of the stack during fluctuating power provided from the intermittent power source 834.

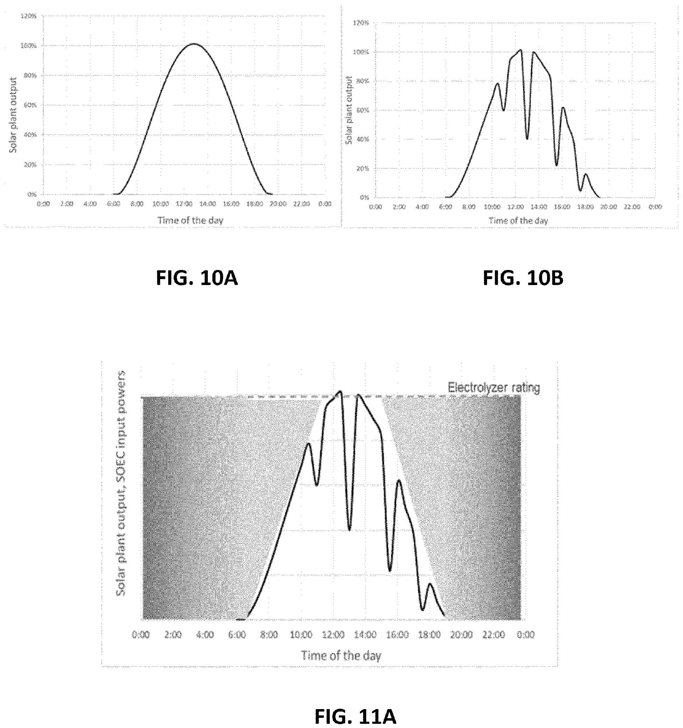

For example, the power output of a solar panel (i.e., photovoltaic) power generation plant ("solar power plant") is represented by graphs in FIG. 10A and FIG. 10B that illustrate percentage of peak power output over time from the solar power plant. As shown in FIG. 10A, the solar plant power output may vary throughout the day and becomes completely zero during nighttime due to the lack of sunlight. As shown in FIG. 10B, the solar plant power output may experience short drops (though long drops are also possible) from clouds, obstructions or other occlusions of the Sun (e.g., solar eclipse). However, in contrast to the power curves illustrated in FIGS. 10A and 10B, electrolyzer systems 200 / 800 may operate more efficiently when input power and hydrogen production rates do not fluctuate (like the power curves in FIGS. 10 and 10B).

As described above, prioritization and controlled responses in response to power drops are used to reduce or prevent damage to the stack 100 and improve the lifespan of the SOEC 1 fuel electrodes 7 by avoiding oxidation of nickel in the fuel electrodes 7. For example, prioritizing maximum hydrogen production by following the solar plant power output curve in FIG. 10B (i.e., by increasing and decreasing hydrogen production rates as a function of available solar power) at the expense of stack 100 temperature for even short periods may result in damage to the fuel electrodes 7 due to oxidation of nickel to nickel oxide and subsequent reduction of the nickel oxide to nickel when hydrogen production resumes or increases. In other words, if the hydrogen production rate follows the solar power availability, the stack 100 temperature may fluctuate accordingly, which may lead to sharp stack 100 temperature drops and oxidation of nickel in the fuel electrodes.

Where hydrogen production rates do follow available power from the solar power plant, the SOEC stack 100 may be turned off completely every night. This approach comes with several major disadvantages, including higher cost and lower reliability. For example, an electrolyzer system 200 may be configured in two different ways for a given size.

In a first comparative embodiment, the electrolyzer system 200 may be configured to utilize voltages close to an associated solar power plant rating, as shown in FIG. 11A. Since solar power is intermittent during the day and unavailable during the night, the electrolyzer system 200 capacity is rarely fully utilized, which means that the capital costs of the electrolyzer system 200 are much harder to recoup. As shown in FIG. 11A, the dark shaded area represents the underutilized portion of an electrolyzer system 200 on a 24-hour scale.

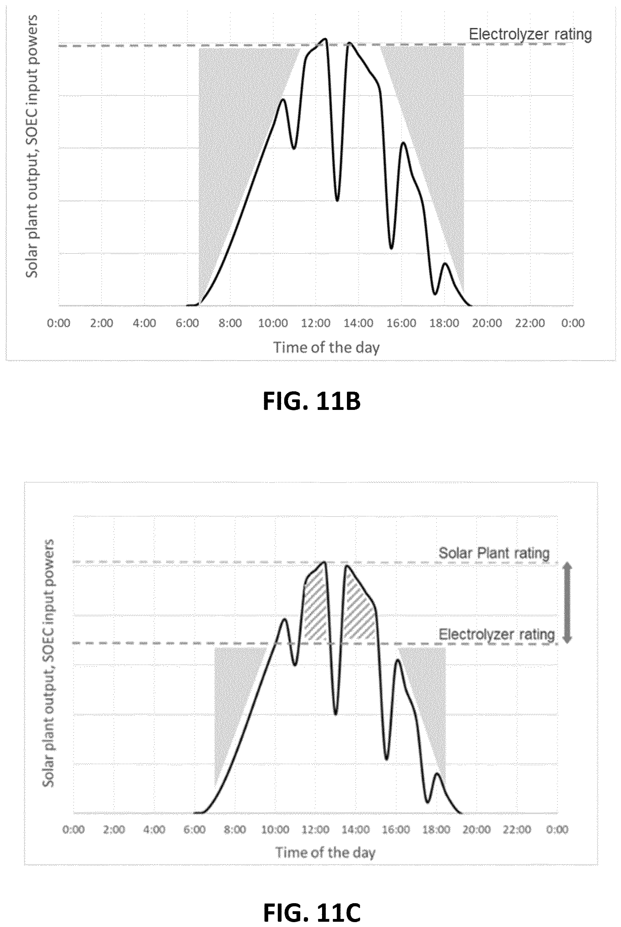

As shown in FIG. 11B, the electrolyzer system 200 may still be considerably underutilized even with a 12-hour operating cycle, where the electrolyzer system 200 rating is configured to utilize the peak solar energy during the day. In addition to daily variations and weather-related variations to solar energy capacity, the available solar energy varies by time of year or season in many places on Earth, which may result in worse utilization metrics at other times in the year.

In a second comparative embodiment shown in FIG. 11C, the electrolyzer system 200 is configured for a lower rating that does not utilize peak solar capacity, which may result in a larger total utilization percentage over a 12-hour operating cycle. However, as shown in FIG. 11C, the solar power produced during mid-day (gray striped area) is not utilized to produce hydrogen, and thus, some portion of the solar plant capacity is also underutilized.

In summary, configuring an electrolyzer system 200 to operate at peak solar capacity, as in the first comparative embodiment, may result in more thermal cycling and higher costs because the electrolyzer system 200 is overbuilt. Furthermore, where maximizing hydrogen production remains the primary operating goal of the lower rated system of the second comparative embodiment shown in FIG. 11C, similar damage to the stack may be incurred due to solar power fluctuations.

Accordingly, operating the electrolyzer system 200 according to the comparative embodiments using only solar energy (or other intermittent energy sources) to provide electric power may result in waste and lower lifespan for the electrolyzer system 200. Likewise, turning on and off the entire electrolyzer system 200 every day may increase wear and tear on the stacks 100 which in turn impacts the reliability of the system and impacts the lifespan of the stacks 100.

In order to address the costly tradeoff between electrolyzer system 200 power rating and solar capacity waste, the system 800 includes an electrolyzer system 200, an intermittent power source 834 and an additional ESS 836. The ESS 836 is electrically integrated with (i.e., electrically connected to) the electrolyzer system 200 and is configured to improve life-span and reliability of the electrolyzer system 200, while reducing the overall system 800 capital and operating costs. The ESS 836 may compensate for the power intermittency and unavailability issues of renewable intermittent power sources 834, such as solar power. Various embodiments are described below using a solar power plant as the intermittent power source 834. However, in other embodiments, any other or additional intermittent power source 834 may also be used.

As illustrated in FIG. 8, the electrolyzer system 200 may be powered by a common DC bus 820 which is electrically connected to one or more intermittent power sources 834 as well as the ESS (e.g., battery) 836 power source. The DC/DC converter 822 that is electrically connected to the ESS 836 by the second bus 846 may be controlled based on the voltage requirements of the DC bus 820. The ESS 836 may fill gaps in power generation by the intermittent power source 834. The gaps may comprise the power drops shown in FIG. 10B. The controller 125 may be configured to plan a power (e.g., voltage) requirement for the electrolyzer system 200 based on the available energy (e.g., electric power) stored in the ESS 836. When sufficient power is not available to produce hydrogen product safely, the controller 125 may control the electrolyzer system 200 or a portion thereof to enter the above described hot standby mode instead of shutting down completely in order to avoid thermal cycling.

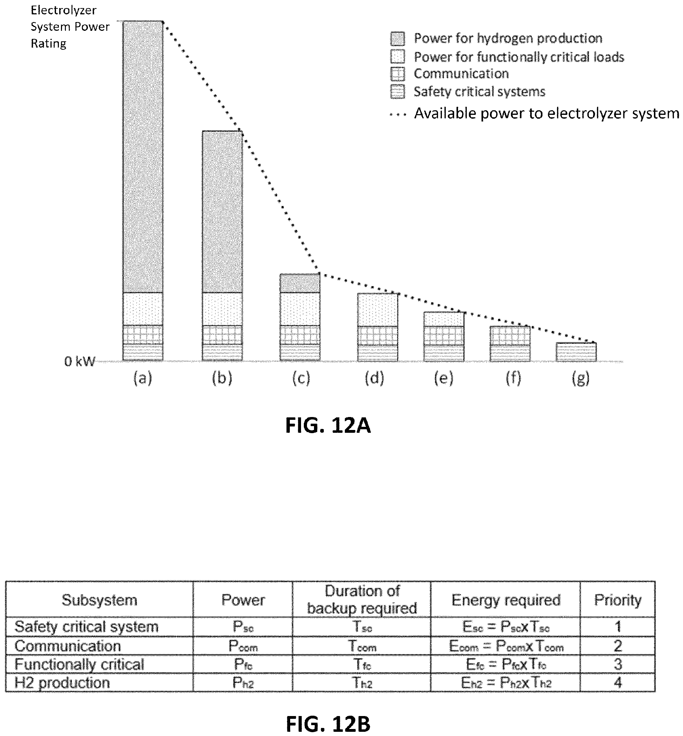

FIG. 12A illustrates the power requirements for the electrolyzer system 200 with various exemplary setpoints for operation at different power levels. The setpoints of FIG. 12A may apply to one or more individual SOEC stacks 100, one or more individual SOEC stack columns or electrical segments (e.g., two or more columns electrically connected in parallel), an entire electrolyzer module 700 containing a hotbox 300 housing a plurality of stacks 100 or stack columns 101, plural electrolyzer modules 700, or the entire electrolyzer system 200 including all electrolyzer modules 700 therein.

The power provided by the power sources 834, 836 to the electrolyzer system 200 may be used to generate (e.g., produce) hydrogen using electrolysis and to supply power to support subsystems. The support subsystems of the electrolyzer system 200 may be categorized according to function and priority to determine which support subsystem is provided with the limited power available from the power sources 834 and 836. The support subsystems include functionally critical electrical loads (e.g., subsystems), system communication subsystems (e.g., communication components which permit the controller 125 to communicate with a central control facility), and safety critical subsystems.

Specifically, some support subsystems may be categorized as safety critical. Safety critical subsystems may operate in the electrolyzer system 200 to maintain safety of the electrolyzer system 200 by continuously monitoring components of the electrolyzer system 200 and taking appropriate safety actions based on detected events. The safety critical subsystems may include safety critical controllers (e.g., proportional-integral-derivative controllers), conduit monitoring components, such as pressure, temperature and/or electrical sensors, that provide data to the safety critical controllers, conduit control components such as valves, pumps, blowers, and electrical switchboard components. The power consumed by the safety critical subsystems, P_{sc} may be very low (<0.01%, such as 0.001 to 0.005%) of the electrolyzer system 200 power rating.

Some support subsystems may be categorized as communication subsystems. The communication subsystems in electrolyzer system 200 may operate to support safety critical subsystems in monitoring the electrolyzer system 200 and also to provide remote monitoring, logging, and control of the electrolyzer system 200. The communication subsystems may include wireless and/or wired data transmission and receiver systems which provide data to a central control facility and receive control instruction data from a central control facility. Similar to P_{sc}, the power consumed by the communication subsystems, P_{com}, may be very low (<0.01%, such as 0.001 to 0.005%) of the electrolyzer system 200 power rating.

Some support subsystems may be categorized as functionally critical subsystems. The functionally critical subsystems may include the systems that allow operation and prevent costly stack 100 damage and recovery times. For example, functionally critical subsystems may include heaters, such as water system heaters used to heat steam conduits to avoid freezing of the steam conduits, and stack heaters used to heat the stacks 100 to elevated temperatures that prevent fuel electrode 7 nickel oxidation. The power consumed by functionally critical subsystems, P_{fc}, may be between 2-5% of the total electrolyzer system 200 power rating.

Various other (e.g., remaining) support subsystems may be used only for hydrogen production or may only be needed during hydrogen production. These hydrogen production subsystems in the electrolyzer system 200 may include the stacks 100, other heaters (e.g., air heaters), steam production equipment, hydrogen post-processing equipment (e.g., hydrogen processor 120), the hydrogen storage vessel 52, and other components not required for safety or communication.

As shown in FIG. 12A, the electrolyzer system 200 may operate at its full rated capacity as long as the intermittent power source 834 is able to deliver the sufficient power to the DC bus 820. At a full power utilization of the electrolyzer system 200 (i.e., at or near the electrolyzer system's rating) at setpoint (a), the system power utilization is directed primarily to hydrogen production. In other words, more than 50%, such as 50 - 95% of the power drawn, for example 60 to 90% of the power drawn, by the electrolyzer system 200 is used to power the stacks 100 or stack columns to generate the hydrogen product by electrolysis. The remaining power drawn by the electrolyzer system 200 is used to supply power to the support subsystems which include the functionally critical electrical loads, the system communication (e.g., for the controller 125 to communicate with a central control facility) and the safety critical subsystems.

In case the electrolyzer system 200 does not receive sufficient power to meet its power rating which is used produce the hydrogen product at its rated production capacity, the controller 125 then adjusts the system 200 power draw to match the available power from the power sources 834, 836 while following a predefined set of rules and priorities. FIG. 12A illustrates exemplary predefined sets of rules and priorities based on the amount of power available to the electrolyzer system 200 from the power sources 834, 836.

Specifically, as power level supplied to the electrolyzer system 200 from the power sources 834 and 836 via the common DC bus 820 decreases, the first reduction in power usage may be at the stack 100 or column terminals that are used to power the stack or stack column to generate (i.e., produce) hydrogen. As shown in FIG. 12A, at setpoint (b), hydrogen production is reduced (e.g., hydrogen production continues, but at a lower rate than at setpoint (a)) while other support subsystems remain at full power.

At setpoint (c), with a further reduction of the power on the common DC bus 820, the production of hydrogen is reduced further. At setpoint (d) with a further reduction of the power on the common DC bus 820, the production of hydrogen may be stopped and the electrolyzer system 200 or a portion thereof may enter the hot standby mode, and provide full required power to the support subsystems which include the functionally critical electrical loads, the system communication and the safety critical subsystems. The reduction in supplied power and hydrogen production to match the supplied power is not limited to discrete setpoints (a)-(d) and may include a continuous reduction in supplied stack 100 power that continuously deceases with a decreased in power provided by the power sources 834, 836 to the common DC bus 820, up to the setpoint (d).

In summary, referring to setpoints (b) to (d) in FIG. 12A, when the power output from the intermittent power source 834 drops due to any reason (such as a cloud passing over the solar power plant or partial failure of the solar power plant), the electrolyzer system 200 may first curtail its hydrogen production rate while not disturbing power flow to other high priority support subsystems, including functionally critical, communication, and safety critical subsystems. This maintains the stack 100 at a temperature above the nickel oxidation temperature. If the solar power further decreases to a critical value at setpoint (d), then the electrolyzer system 200 may completely stop the hydrogen production and may enter the hot standby mode.

The hot standby mode includes a state in which the electrolyzer system 200 does not produce any hydrogen product but supports the functionally critical, communication, and safety critical subsystems, as shown at setpoint (d), to maintain the stack 100 at a temperature above the nickel oxidation temperature. The power required by the electrolyzer system 200 during the hot standby mode comprises P_{hot_sb} = P_{sc}+P_{com}+P_{tc}. The hot standby mode may incorporate the support subsystems rated as priorities 1, 2, or 3 in FIG. 12B and the voltage requirement for full hot standby may be the sum total of the voltage requirements of those subsystems (e.g., functionally critical, communication, and safety critical). Below this power level (e.g., setpoint (d)), based on available power to the electrolyzer system 200, the electrolyzer system 200 may start curtailing power to its functionally critical subsystems first and then to communication subsystems and finally to the safety critical subsystems, as shown at setpoints 5(e), 5(f), and 5(g) in FIG. 12A.

For example, at setpoint (e), the power level provided by the power sources 834, 836 may support providing partial power to functionally critical subsystem loads, which may require a subset of the functionally critical subsystem loads to shut off. Setpoint (e) may correspond to the isolated hot standby mode or the electrolyzing hot standby mode where the stack 100 is isolated via one or more valves to conserve heat, as described above. At a power level below that of setpoint (e), controller 125 may follow next level priorities within the functionally critical subsystem loads (i.e., lowering the power supplied to one or more heaters to lower the temperature of one or more heaters to keep stacks 100 at less-than-ideal temperature) to minimize the depth of the thermal cycle to the stacks 100. At setpoint (f), the functionally critical subsystems may be shut off and a shutdown process may begin. At setpoint (g), communication subsystems may be shut off and a shutdown process may be completed such that only passive processes remain (e.g., cool down). At setpoint (g), only the safety critical subsystems may remain on. Since the safety critical subsystems consume very little power, they may be powered for a long time by the remaining power stored in the ESS 836, until the intermittent power source 834 begins to again produce power.

The ESS 836 stores a finite amount of power and is recharged by power from the intermittent power source 834. In case the intermittent power source 834 is not available to provide power to the electrolyzer system 200, the stored power from the ESS 836 is provided to the electrolyzer system 200 until the stored power is exhausted. For example, in the case a solar intermittent power source 834 is used, the ESS 836 may provide power to the electrolyzer system 200 so that solar dropouts do not result in rapid reductions in power (e.g., voltage) to the electrolyzer system 200. The sizing of the ESS may be based on the estimated energy requirements of the electrolyzer system 200 subsystems and based on the duration of backup power from the ESS required for each subsystem, as illustrated in the table of FIG. 12B. For example, each of the priority levels may be assigned a time period of operation powered by the ESS 836 before shifting to the next lower level. The sum of energy requirements for these time periods may correspond to an energy storage requirement in a day or week.

The hot standby power requirement can be expressed as P_{hsb} = P_{sc} + P_{com} + P_{fc} and similarly the time hot standby duration can be expressed as T_{hsb} = T_{sc} + T_{com} + T_{fc}. The energy required for maintaining the hot-standby mode over a period of time is: E_{hsb} = P_{hsb} x T_{hsb}. The value of T_{hsb} may be estimated by using a typical solar irradiation curve in a particular region in which the system 800 is located.

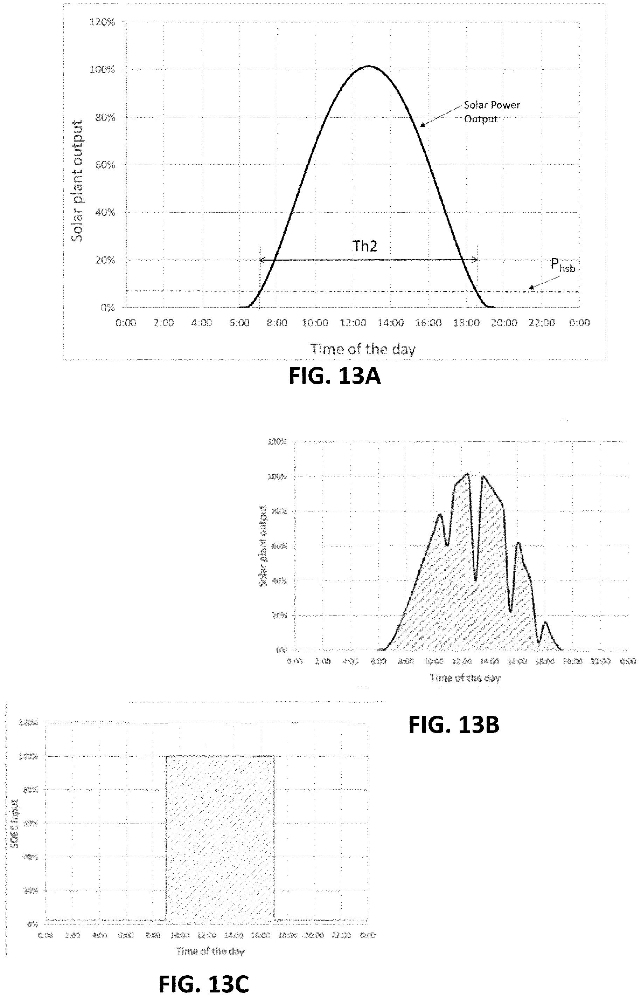

As shown in FIG. 13A, Tₕ₂ is the duration of time where the amount of solar output is greater than power consumed by the electrolyzer system 200 operating in the hot standby mode. With regard to FIG. 13A, T_{hsb} is equal to 24 hours less the value of Tₕ₂ (i.e., T_{hsb} = 24 - Tₕ₂). During Tₕ₂, ESS power output may not be needed to maintain the hot standby mode. The energy for hot standby (E_{hsb}) may be based on the ideal curve on a clear sunny day. The solar power may drop below the hot standby level several times during the day during weather events (e.g., cloudy periods). An additional margin may be added to the ESS 836 to cover these unforeseen weather events. The adjusted hot standby energy may be represented as E_{hsb_adjusted} = k_{hsb} x (E_{hsb}), where k_{hsb} is an adjustment factor.

The value of k_{hgb} may be between 1 to 2 depending on the weather patterns in the location where the system 800 is located. If stored energy in the ESS 836 is exhausted by the electrolyzer system 200, then an alternative power source can be dispatched (e.g., a mobile or back up power generator source) to support hot standby mode operation of the electrolyzer system 200. Alternatively, the electrolyzer system 200 may be shut down if the alternative power source is not available.

The energy required for solar smoothing may include power needed to maintain hydrogen production or maintain the ability to quickly return to hydrogen production. FIGS. 13A and FIG. 13B are representative graphs of power outputs of a solar power plant on a clear sunny and on a cloudy day, respectively. The profile shown in FIG. 13B is more common compared to FIG. 13A. Therefore, the ESS smoothing may be configured to support solar profiles close to FIG. 13B. FIG. 13C illustrates an ideal power required for the electrolyzer system 200 to generate hydrogen during the day from sunrise to sunset. The energy required for water electrolysis may be characterized or calculated as the area under the step function of FIG. 13C such that the power sources 834 and 836 provide power sufficient for full rate operation of the electrolyzer system 200 to produce a rated amount of hydrogen product for a given time period.

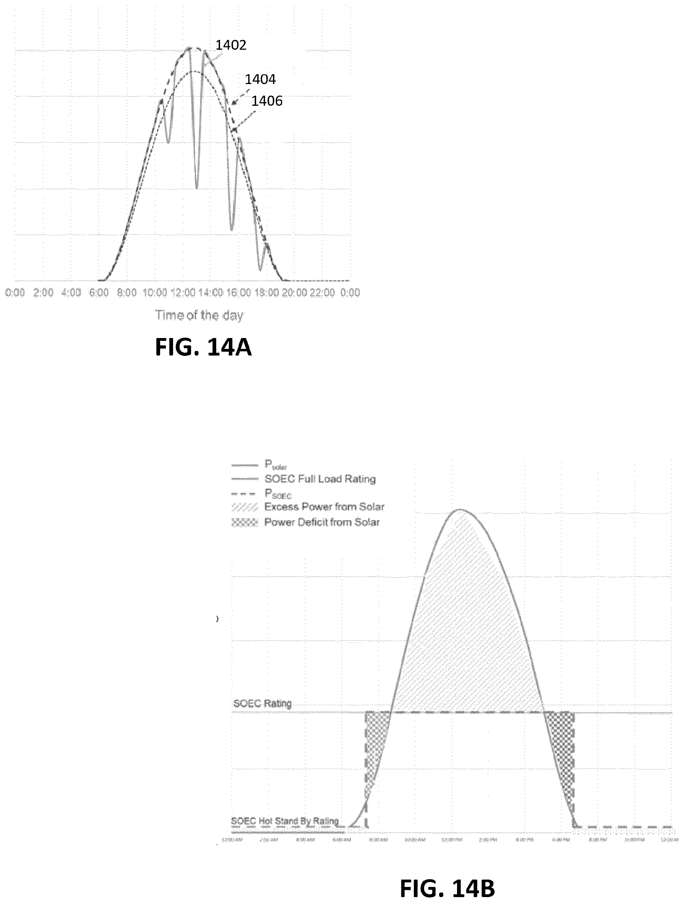

FIG. 14A shows the un-simplified profile 1402 of FIG. 13B. To simplify the profile 1402, the expected solar curve may be defined as the ideal solar curve 1404 with a correction factor 1406 (K_{s_cloud}), as shown in FIG. 14A. The correction factor 1406 (K_{s_cloud}) may be between 0 to 1 based on the weather conditions and other parameters, where K_{s_cloud} = 1 represents a clear sunny day, and K_{s_cloud} = 0 represents the solar power plant 834 being down for the entire day. The solar power plant and associated electrolyzer system 200 may be configured such that some portion of the day the solar power plant produces more power than the electrolyzer system's load power demand. This excess power generation from the solar intermittent power source 834 may be stored in the ESS 836. When solar power drops below the electrolyzer system 200 rating or another operational setpoint shown in FIG. 12A., then the stored energy in the ESS 836 may be retrieved and provided to the electrolyzer system 200 to meet its power demand. Stored and retrieved energy of the ESS 836 may be referred as charging and discharging energies.

In an ideal example case, the amount of charging energy, E_{ESS_ch} (i.e., excess power from solar power plant), may be estimated by integrating the positive area between Pₛₒₗₐᵣ - P_{SOEC} curves (inner lined gray area in FIG. 14B), where Pₛₒₗₐᵣ is the solar intermittent power source 834 power output, and P_{SOEC} is the electrolyzer system 200 load demand. Similarly, the amount of discharging energy, E_{ESS_disch} (i.e., power deficit from the solar power plant), may be estimated by integrating negative area between the Pₛₒₗₐᵣ - P_{SOEC} curves (outer gray hatched areas in FIG. 14B). Since the amount of discharge energy cannot be more than the charge energy, the duration and power level of the electrolyzer system 200 operation may be adjusted to achieve a balance between E_{ESS_ch} and E_{ESS_disch}. The balance between E_{ESS_ch} and E_{ESS_disch} may be calculated according to a predetermined time period, such as a day or a week.

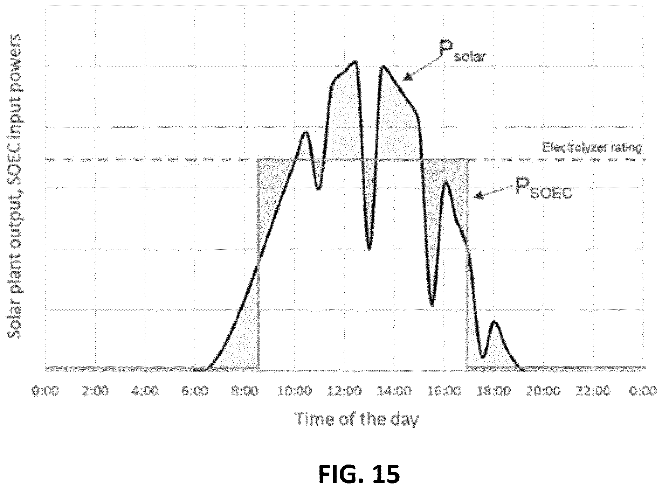

In another example case illustrated in FIG. 15, the estimated discharge energy may include the K_{s_cloud} adjustment. The adjusted solar intermittent power source 834 power output, P_{solar_adj}, equals the product of Pₛₒₗₐᵣ and K_{s_cloud} (i.e., P_{solar_adj} = Pₛₒₗₐᵣ*K_{s_cloud}). Therefore, the adjusted amount of discharging energy, E_{ESS_disch_adj} may be estimated by integrating a negative area under P_{solar_adj} - P_{SOEC} curve. The adjusted amount of charging energy, E_{ESS_ch_adj} may be estimated by integrating a positive area under P_{solar_adj} - P_{SOEC} curve. The total capacity of the ESS 836 is E_{ESS} = E_{ESS_disch_adj} + E_{hsb_adjusted}.

The full charge / discharge / usage round trip efficiencies of all system 800 components (i.e., the electrolyzer system 200, the solar intermittent power source 834 and the ESS 836) may impact the E_{ESS} value, such that an inefficiency adjustment may be added to the ESS capacity requirement. The final values of K_{s_cloud}, the duration of the electrolyzer system hot standby mode operation, T_{SOEC}, and the ESS capacity, E_{ESS}, may be selected depending on various factors, such as weather patterns as well as capital and operational costs.

The management of ESS charge and discharge during the operation of the electrolyzer system 200 may vary significantly from day to day. The energy management process for the electrolyzer system 200 may ensure that sufficient energy is left in the ESS for scheduled hot standby mode (e.g., at the end of every day after sunset), and adjust the start point of the hot standby mode based on intermittent power source 834 power generation capacity and remaining ESS 836 storage capacity. During a particularly cloudy weather day (i.e., when the amount of sunshine is either zero or significantly below average for the specific location), the controller 125 may reserve additional energy capacity in ESS 836 to cover the increase in hot standby mode duration, T_{hsb}. For example, as shown in FIG. 15, the dropouts in solar energy below the predicted solar curve (Pₛₒₗₐᵣ) may require a discharge from ESS 836 to prevent premature entry into the hot standby mode. As a result of the early discharge from the ESS 836, the controller 125 may adjust the scheduled hot standby mode at the end of the day based on the remaining energy capacity of the ESS 836, such that less total power is provided from the ESS 836 during the hot standby mode.

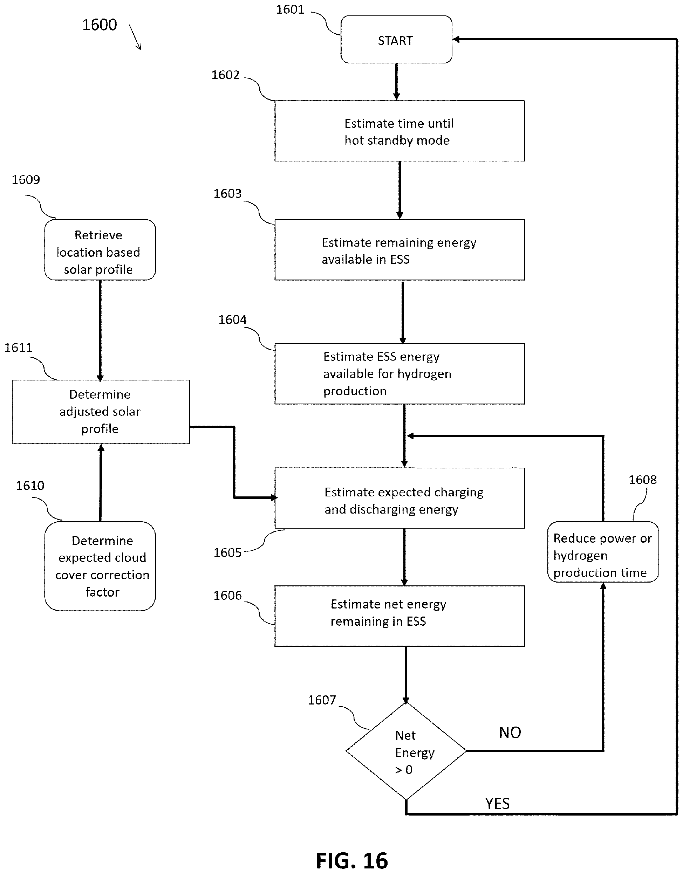

FIG. 16 illustrates a management process 1600 for adjusting charging/discharging and usage of energy from the ESS 836. Various components (e.g., controller 125, power supply 500, DC/DC converters 812, 822, etc.) described herein may operate to perform the process 1600 by executing machine readable and computer executable instructions. The electrolyzer system 200 may include a controller 125 which may coordinate power usage of the electrolyzer system 200 based on monitoring information received from various sensors located in the system 800.

The process 1600 may start at block 1601 which may be a scheduled start at the beginning of a day (e.g., at sunrise). The process 1600 may estimate energy (e.g., a product of power and time) required for the electrolyzer system 200 to generate hydrogen product using energy from the intermittent power source 834, such as a solar power plant, and supplemented by energy from the ESS 836, for an entire day or other predetermined period, until the electrolyzer system 200 enters the scheduled hot standby mode.

In block 1602, the controller may estimate the time until the system is expected to return to the hot standby mode (i.e., duration between the current time and the scheduled hot standby mode entry time). This time may include the time remaining until sunset or until the solar power plant power is expected to begin being used for recharging the ESS 836 instead of or in addition to providing power to the electrolyzer system 200. The time may be based on an expected solar profile for the day or a number of daylight hours (e.g., time until sunset). For intermittent power sources 834 other than solar power plants, the expected time may be calculated based on expected characteristics of those intermittent power sources.

In block 1603, the controller may estimate the remaining total energy available in the ESS 836 (i.e., Eₑₛₛ). One or more sensors (e.g., state of charge sensor in a battery or supercapacitor ESS) may determine a remaining energy in the ESS (e.g., remaining charge based on voltage, current and a charge / discharge profile for a battery ESS).

In block 1604, the controller may estimate the energy available from the ESS 836 that is available for hydrogen production in the electrolyzer system 200. The ESS energy available for hydrogen production, E_{ess_h2} = Eₑₛₛ - E_{hsb_adjusted}. The determination of the value of adjusted hot standby energy, E_{hsb_adjusted}, is described above.

In block 1605, the controller may estimate the expected amount of adjusted charging energy, E_{ESS_ch_adj}, and the expected amount of adjusted discharging energy, E_{ESS_disch_adj}, by integrating respective positive and negative areas between P_{solar_adj} and P_{SOEC} curves, as described above.

In block 1606, the controller may estimate the net energy remaining in the ESS, Eₙₑₜ, for the using the following formula: Eₙₑₜ = E_{ess_h2} - E_{ESS_disch_adj} + E_{ESS_ch_adj}. In other words, the net energy remaining in the ESS is the sum of the ESS energy available for hydrogen production and the expected adjusted amount of charging energy minus the expected adjusted amount of discharging energy.

In block 1607, the controller may determine whether the net energy remaining in the ESS is greater than zero (i.e., if Eₙₑₜ > 0). If the net energy remaining is positive (i.e., greater than zero), such that the determination = YES, the process may return to the start 1601 or to block 1602 or another part of the process described herein.

If the net energy is remaining is not greater than zero (i.e., is negative or equal to zero), such that the determination = NO, the process may proceed to block 1608 where the controller 125 may reduce at least one of the electrolyzer system 200 load demand (P_{SOEC}) and/or the duration of the hydrogen product generation (Tₕ₂) by the electrolyzer system 200. In other words, the controller 125 may evaluate various methods of reducing hydrogen production including reducing the time spent producing hydrogen and/or reducing the amount of power (e.g., reducing the DC bus 820 voltage) used for hydrogen production. After the reduction in P_{SOEC} and/or tₕ₂, the process returns to block 1605.

In block 1609, the value of Pₛₒₗₐᵣ may be retrieved from system memory, where Pₛₒₗₐᵣ may be stored as a location based solar profile for the location of the system 800. In block 1610, the value of the correction factor 1406, K_{s_cloud}, may be determined using a predictive algorithm, as described above. The algorithm considers various factors available to it, such as weather prediction tools, analysis tools based on previous data, etc.

In block 1611, the controller 125 determines the adjusted solar intermittent power source 834 power output, P_{solar_adj}, from a product of the solar intermittent power source 834 power output, Pₛₒₗₐᵣ, and the correction factor 1406, K_{s_cloud} (i.e., P_{solar_adj} = Pₛₒₗₐᵣ*K_{s_cloud}). The controller uses the determined value of P_{solar_adj} in determining the expected amount of adjusted charging energy, E_{ESS_ch_adj}, and the expected amount of adjusted discharging energy, E_{ESS_disch_adj}, in block 1605.

As a result of process 1600, the hydrogen production may be estimated before the hot standby mode starts using prestored solar profile, a dynamic K_{s_cloud} cloud correction factor 1406, and a planned electrolyzer system 200 load demand profile. If the controller determines that the planned electrolyzer system 200 load demand profile may result in zero or negative net energy remaining in the ESS 836, the controller may reduce the load demand during hydrogen production and/or duration of hydrogen production to ensure that positive net energy remains in the ESS 836 at the end of the hot standby mode (e.g., overnight) to avoid shutting down the electrolyzer system 200 until the sunlight is available again to power the solar power plant.

The embodiments of the present disclosure reduce the total capital cost and operating cost of a remote or grid islanded electrolyzer system that is powered by a combination of a dedicated renewable intermittent power source, such as a solar power plant, and an ESS, by permitting the electrolyzer system to generate a hydrogen product at a relatively constant rate, as well as keeping the electrolyzer cell stacks at a required elevated temperature throughout the 24 hour day (i.e., during daytime and nighttime). The embodiments also provide an additional layer of safety and reliability by keeping safety critical subsystems and communication subsystems powered throughout the day even in case of reduced or no power provided form the renewable power source, by prioritizing energy stored in the ESS for powering the safety critical subsystems and the communication subsystems.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.

The invention also refers to the following embodiments, wherein the term "claim" means "embodiment":
1. A method operating an electrolyzer system, comprising:
   producing hydrogen by electrolysis of steam in at least one electrolyzer cell stack of the electrolyzer system using power received from an intermittent power source;
   detecting a reduction in a level of power received from the intermittent power source below a first threshold;
   decreasing a rate of producing the hydrogen in response to the detected reduction in the level power below the first threshold;
   detecting a reduction in a level of power received from the intermittent power source below a second first threshold that is lower than the first threshold; and
   switching the electrolyzer system into a hot standby mode in which the electrolyzer system does not produce the hydrogen and maintains the least one electrolyzer cell stack above a predetermined threshold temperature.
2. The method of 1, wherein the electrolyzer system maintains the least one electrolyzer cell stack above the predetermined threshold temperature during the hot standby mode using power from an energy storage system.
3. The method of claim 2, further comprising charging the energy storage system using the power received from an intermittent power source.
4. The method of claim 2, wherein:
   the intermittent power source comprises at least one of solar, wind, geothermal or tidal power sources; and
   the electrolyzer system is not electrically connected to a power grid.
5. The method of claim 2, wherein:
   the at least one electrolyzer cell stack comprises a solid oxide electrolyzer cell stack containing solid oxide electrolyzer cells comprising a solid oxide electrolyte, an air electrode, and a fuel electrode comprising a nickel containing cermet; and
   the predetermined threshold temperature comprises a nickel oxidation temperature.
6. The method of claim 2, further comprising estimating an energy required for the electrolyzer system to generate the hydrogen using energy from the intermittent power source and from the energy storage system for a predetermined period until the electrolyzer system enters the hot standby mode.
7. The method of claim 6, wherein:
   the intermittent power source comprises a solar power plant;
   the predetermined period is a 24 hour day; and
   the step of estimating the energy required for the electrolyzer system to generate the hydrogen uses a prestored solar profile, a dynamic cloud correction factor, and a planned electrolyzer system load demand profile.
8. The method of claim 7, further comprising:
   determining if the planned electrolyzer system load demand profile would result in zero or negative net energy remaining in the energy storage system at an end of the hot standby mode; and
   if it is determined that the planned electrolyzer system load demand profile would result in the zero or negative net energy remaining in the energy storage system at the end of the hot standby mode, reducing at least one of a planned load demand during the step of producing hydrogen production or a planned duration of the step of producing hydrogen production such that a positive net energy would remain in the energy storage system at the end of the hot standby mode.
9. The method of claim 2, wherein:
   power from the energy storage system is used to operate support subsystems during the hot standby mode; and
   the support subsystems comprise functionally critical subsystems, communication subsystems and safety critical subsystems.
10. The method of claim 9, further comprising:
   detecting a reduction in a level of power received from the energy storage system below a third threshold that is lower than the second threshold;
   turning off power to the functionally critical subsystems, while providing power from the energy storage system to the communication subsystems and the safety critical subsystems, in response to detecting the reduction in the level of power received from the energy storage system below the third threshold;
   detecting a reduction in a level of power received from the energy storage system below a fourth threshold that is lower than the third threshold; and
   turning off power to the communication subsystems, while providing power from the energy storage system to the safety critical subsystems, in response to detecting the reduction in the level of power received from the energy storage system below the fourth threshold.
11. A system, comprising:
   an electrolyzer system comprising at least one electrolyzer cell stack configured to produce hydrogen by electrolysis of steam;
   an intermittent power source electrically connected to the electrolyzer system;
   an energy storage system electrically connected to the electrolyzer system; and
   a controller including machine executable instructions that operate to:
      detect a reduction in a level of power received from the intermittent power source below a first threshold;
      decrease a rate of producing the hydrogen in response to the detected reduction in the level power below the first threshold;
      detect a reduction in a level of power received from the intermittent power source below a second first threshold that is lower than the first threshold; and
      switch the electrolyzer system into a hot standby mode in which the electrolyzer system does not produce the hydrogen and maintains the least one electrolyzer cell stack above a predetermined threshold temperature.
12. The system of claim 11, wherein the electrolyzer system is configured to maintain the least one electrolyzer cell stack above the predetermined threshold temperature during the hot standby mode using power from the energy storage system.
13. The system of claim 12, wherein the intermittent power source is electrically connected to the energy storage system to charge the energy storage system.
14. The system of claim 12, wherein:
   the intermittent power source comprises at least one of solar, wind, geothermal or tidal power sources; and
   the electrolyzer system is not electrically connected to a power grid.
15. The system of claim 12, wherein:
   the at least one electrolyzer cell stack comprises a solid oxide electrolyzer cell stack containing solid oxide electrolyzer cells comprising a solid oxide electrolyte, an air electrode, and a fuel electrode comprising a nickel containing cermet; and
   the predetermined threshold temperature comprises a nickel oxidation temperature.
16. The system of claim 12, wherein the controller is further configured to estimate an energy required for the electrolyzer system to generate the hydrogen using energy from the intermittent power source and from the energy storage system for a predetermined period until the electrolyzer system enters the hot standby mode.
17. The system of claim 16, wherein:
   the intermittent power source comprises a solar power plant;
   the predetermined period is a 24 hour day; and
   the controller is further configured to use a prestored solar profile, a dynamic cloud correction factor, and a planned electrolyzer system load demand profile to estimate the energy required for the electrolyzer system to generate the hydrogen.
18. The system of claim 17, wherein the controller is further configured to:
   determine if the planned electrolyzer system load demand profile would result in zero or negative net energy remaining in the energy storage system at an end of the hot standby mode; and
   reduce at least one of a planned load demand during the step of producing hydrogen production or a planned duration of the step of producing hydrogen production such that a positive net energy would remain in the energy storage system at the end of the hot standby mode, if it is determined that the planned electrolyzer system load demand profile would result in the zero or negative net energy remaining in the energy storage system at the end of the hot standby mode.
19. The system of claim 12, wherein:
   the controller is configured to direct power from the energy storage system to operate support subsystems during the hot standby mode; and
   the support subsystems comprise functionally critical subsystems, communication subsystems and safety critical subsystems.
20. The system of claim 19, wherein the controller is further configured to:
   detect a reduction in a level of power received from the energy storage system below a third threshold that is lower than the second threshold;
   turn off power to the functionally critical subsystems, while power from the energy storage system is provided to the communication subsystems and the safety critical subsystems, in response to detecting the reduction in the level of power received from the energy storage system below the third threshold;
   detect a reduction in a level of power received from the energy storage system below a fourth threshold that is lower than the third threshold; and
   turn off power to the communication subsystems, while power from the energy storage system is provided to the safety critical subsystems, in response to detecting the reduction in the level of power received from the energy storage system below the fourth threshold.

## Claims

1. A method operating an electrolyzer system, comprising:
producing hydrogen by electrolysis of steam in at least one electrolyzer cell stack of the electrolyzer system using power received from an intermittent power source;
detecting a reduction in a level of power received from the intermittent power source below a first threshold;
decreasing a rate of producing the hydrogen in response to the detected reduction in the level power below the first threshold;
detecting a reduction in a level of power received from the intermittent power source below a second first threshold that is lower than the first threshold; and
switching the electrolyzer system into a hot standby mode in which the electrolyzer system does not produce the hydrogen and maintains the least one electrolyzer cell stack above a predetermined threshold temperature.

2. The method of 1, wherein the electrolyzer system maintains the least one electrolyzer cell stack above the predetermined threshold temperature during the hot standby mode using power from an energy storage system.

3. The method of claim 2, further comprising charging the energy storage system using the power received from an intermittent power source.

4. The method of claim 2, wherein:
the intermittent power source comprises at least one of solar, wind, geothermal or tidal power sources; and
the electrolyzer system is not electrically connected to a power grid.

5. The method of claim 2, wherein:
the at least one electrolyzer cell stack comprises a solid oxide electrolyzer cell stack containing solid oxide electrolyzer cells comprising a solid oxide electrolyte, an air electrode, and a fuel electrode comprising a nickel containing cermet; and
the predetermined threshold temperature comprises a nickel oxidation temperature.

6. The method of claim 2, further comprising estimating an energy required for the electrolyzer system to generate the hydrogen using energy from the intermittent power source and from the energy storage system for a predetermined period until the electrolyzer system enters the hot standby mode.

7. The method of claim 6, wherein:
the intermittent power source comprises a solar power plant;
the predetermined period is a 24 hour day;
the step of estimating the energy required for the electrolyzer system to generate the hydrogen uses a prestored solar profile, a dynamic cloud correction factor, and a planned electrolyzer system load demand profile; and
further comprising:
determining if the planned electrolyzer system load demand profile would result in zero or negative net energy remaining in the energy storage system at an end of the hot standby mode; and
if it is determined that the planned electrolyzer system load demand profile would result in the zero or negative net energy remaining in the energy storage system at the end of the hot standby mode, reducing at least one of a planned load demand during the step of producing hydrogen production or a planned duration of the step of producing hydrogen production such that a positive net energy would remain in the energy storage system at the end of the hot standby mode.

8. The method of claim 2, wherein:
power from the energy storage system is used to operate support subsystems during the hot standby mode;
the support subsystems comprise functionally critical subsystems, communication subsystems and safety critical subsystems; and
further comprising:
detecting a reduction in a level of power received from the energy storage system below a third threshold that is lower than the second threshold;
turning off power to the functionally critical subsystems, while providing power from the energy storage system to the communication subsystems and the safety critical subsystems, in response to detecting the reduction in the level of power received from the energy storage system below the third threshold;
detecting a reduction in a level of power received from the energy storage system below a fourth threshold that is lower than the third threshold; and
turning off power to the communication subsystems, while providing power from the energy storage system to the safety critical subsystems, in response to detecting the reduction in the level of power received from the energy storage system below the fourth threshold.

9. A system, comprising:
an electrolyzer system comprising at least one electrolyzer cell stack configured to produce hydrogen by electrolysis of steam;
an intermittent power source electrically connected to the electrolyzer system;
an energy storage system electrically connected to the electrolyzer system; and
a controller including machine executable instructions that operate to:
detect a reduction in a level of power received from the intermittent power source below a first threshold;
decrease a rate of producing the hydrogen in response to the detected reduction in the level power below the first threshold;
detect a reduction in a level of power received from the intermittent power source below a second first threshold that is lower than the first threshold; and
switch the electrolyzer system into a hot standby mode in which the electrolyzer system does not produce the hydrogen and maintains the least one electrolyzer cell stack above a predetermined threshold temperature.

10. The system of claim 9, wherein the electrolyzer system is configured to maintain the least one electrolyzer cell stack above the predetermined threshold temperature during the hot standby mode using power from the energy storage system.

11. The system of claim 10, wherein the intermittent power source is electrically connected to the energy storage system to charge the energy storage system.

12. The system of claim 10, wherein:
the intermittent power source comprises at least one of solar, wind, geothermal or tidal power sources; and
the electrolyzer system is not electrically connected to a power grid.

13. The system of claim 10, wherein:
the at least one electrolyzer cell stack comprises a solid oxide electrolyzer cell stack containing solid oxide electrolyzer cells comprising a solid oxide electrolyte, an air electrode, and a fuel electrode comprising a nickel containing cermet; and
the predetermined threshold temperature comprises a nickel oxidation temperature.

14. The system of claim 10, wherein:
the controller is further configured to estimate an energy required for the electrolyzer system to generate the hydrogen using energy from the intermittent power source and from the energy storage system for a predetermined period until the electrolyzer system enters the hot standby mode;
the intermittent power source comprises a solar power plant;
the predetermined period is a 24 hour day;
the controller is further configured to use a prestored solar profile, a dynamic cloud correction factor, and a planned electrolyzer system load demand profile to estimate the energy required for the electrolyzer system to generate the hydrogen; and
the controller is further configured to:
determine if the planned electrolyzer system load demand profile would result in zero or negative net energy remaining in the energy storage system at an end of the hot standby mode; and
reduce at least one of a planned load demand during the step of producing hydrogen production or a planned duration of the step of producing hydrogen production such that a positive net energy would remain in the energy storage system at the end of the hot standby mode, if it is determined that the planned electrolyzer system load demand profile would result in the zero or negative net energy remaining in the energy storage system at the end of the hot standby mode.

15. The system of claim 10, wherein:
the controller is configured to direct power from the energy storage system to operate support subsystems during the hot standby mode;
the support subsystems comprise functionally critical subsystems, communication subsystems and safety critical subsystems; and
the controller is further configured to:
detect a reduction in a level of power received from the energy storage system below a third threshold that is lower than the second threshold;
turn off power to the functionally critical subsystems, while power from the energy storage system is provided to the communication subsystems and the safety critical subsystems, in response to detecting the reduction in the level of power received from the energy storage system below the third threshold;
detect a reduction in a level of power received from the energy storage system below a fourth threshold that is lower than the third threshold; and
turn off power to the communication subsystems, while power from the energy storage system is provided to the safety critical subsystems, in response to detecting the reduction in the level of power received from the energy storage system below the fourth threshold.
